(19) Europäisches Patentamt
European Patent Office
Office européen des brevets

(11) **EP 4 300 348 A1**

(12) **EUROPEAN PATENT APPLICATION**

(43) Date of publication:
**03.01.2024 Bulletin 2024/01**

(21) Application number: **23182437.6**

(22) Date of filing: **29.06.2023**

(51) International Patent Classification (IPC):
**G06F 30/3323** (2020.01)  **G06F 7/487** (2006.01)
**G06F 7/556** (2006.01)  **G06F 119/16** (2020.01)

(52) Cooperative Patent Classification (CPC):
**G06F 30/3323; G06F 7/4876; G06F 7/556;**
G06F 2119/16

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.06.2022 GB 202209585**

(71) Applicant: **Imagination Technologies Limited
Kings Langley, Hertfordshire WD4 8LZ (GB)**

(72) Inventors:
• **Edmonds, Rachel
  Kings Langley, WD4 8LZ (GB)**
• **Elliott, Sam
  Kings Langley, WD4 8LZ (GB)**
• **Gaulter, Simon
  Kings Langley, WD4 8LZ (GB)**

(74) Representative: **Slingsby Partners LLP
1 Kingsway
London WC2B 6AN (GB)**

(54) **VERIFICATION OF A HARDWARE DESIGN FOR AN INTEGRATED CIRCUIT TO IMPLEMENT A FLOATING POINT PRODUCT OF POWER FUNCTIONS**

(57) Methods of verifying a property of a hardware design for an integrated circuit to implement a product of power functions of the form $x_0^{t_0} \times ... \times x_n^{t_n}$, wherein $t_0 \cdots t_n$ are fixed, rational numbers, $x_0 \cdots x_n$ are floating point inputs, and $n$ is an integer greater than, or equal to, one. The methods include: performing a first verification phase which comprises formally verifying that, for any first non-exception input set $X = X_0, ..., X_n$ and any second non-exception input set $Y = Y_0, ... , Y_n$ in an input space wherein corresponding inputs have a same mantissa and $(t_0 X_{0.exp} + \cdots + t_n X_{n.exp}) - (t_0 Y_{0.exp} + \cdots + t_n Y_{n.exp})$ is an integer, an instantiation of the hardware design generates outputs $X'$ and $Y'$ with a same mantissa and $X'_{exp} - (t_0 X_{0.exp} + \cdots + t_n X_{n.exp}) = Y'_{exp} - (t_0 Y_{0.exp} + \cdots + t_n Y_{n.exp})$; and performing a second verification phase which comprises verifying the property for the hardware design for a subset of input sets in the input space, the subset of input sets selected based on exponents sets wherein $(t_0 X_{0.exp} + \cdots + t_n X_{n.exp}) - (t_0 Y_{0.exp} + \cdots + t_n Y_{n.exp})$ is an integer. The notation "exp" denotes an exponent of an input or an output.

FIG. 2

**Description**

CROSS-REFERENCE TO RELATED APPLICATION

This application claims priority from UK Patent Application No. 2209585.5 filed on 29 June 2022, which is herein incorporated by reference in its entirety.

TECHNICAL FIELD

This application is directed to methods and systems for verifying hardware designs for integrated circuits to implement a floating point product of power functions.

BACKGROUND

Many electronic devices, such as systems-on-chips (SoCs), include hardware (e.g., an integrated circuit) that implements a product of power functions. A power function is a function of the form $x^t$ where $t$ is a fixed rational number and $x$ is an input/variable.

Examples of power functions include, but are not limited to, $\frac{1}{x}, \sqrt{x}, \frac{1}{\sqrt{x}}.$ and $x^{\frac{2}{3}}.$. A product of power functions is a product of two or more power functions and takes the form shown in equation (1) where $t_0 \cdots t_n$ are fixed, rational numbers, $x_0 \cdots x_n$ are inputs/variables, and $n$ is an integer greater than, or equal to one. Examples of a product of power functions include, but are not limited to, division functions (e.g., $x_0/x_1 = x_0{}^1 \times x_1{}^{-1}$).

$$x_0{}^{t_0} \times \ldots \times x_n{}^{t_n} \qquad (1)$$

Hardware (e.g., an integrated circuit) to implement a product of power functions uses a specific number representation or format, such as, but not limited to, a fixed point number representation or a floating point number representation, to represent the input variables and output values of the function. As is known to those of skill in the art, a fixed point number representation or format has a fixed number of digits after the radix point (e.g., decimal point or binary point). In contrast, a floating point number representation or format does not have a fixed radix point (i.e., it can "float"). In other words, the radix point can be placed anywhere within the representation.

The most common floating point standard is the Institute of Electrical and Electronics Engineers (IEEE) standard for floating-point arithmetic (IEEE-754). IEEE-754 specifies that floating point numbers are represented by three numbers: sign, exponent and mantissa (*s, exp, mant*). In general, the three numbers (*s, exp, mant*) are interpreted, for a fixed integer *bias,* as shown in equation (2):

$$(-1)^s 2^{exp-bias} 1.mant \qquad (2)$$

IEEE-754 defines the four basic formats shown in Table 1 for floating point numbers with varying degrees of precision. In particular, they are encoded with 16, 32, 64 and 128 bits respectively.

Table 1

| Type | Name | Sign Width | Exponent Width (*ew*) | Mantissa Width (*mw*) | Bias $2^{ew-1}$ -1 | Roundoff Error (*u*) |
|---|---|---|---|---|---|---|
| Half | F16 | 1 | 5 | 10 | 15 | $2^{-11}$ |
| Single | F32 | 1 | 8 | 23 | 127 | $2^{-24}$ |
| Double | F64 | 1 | 11 | 52 | 1023 | $2^{-53}$ |
| Quad | F128 | 1 | 15 | 112 | 16383 | $2^{-113}$ |

A product of power functions which receives floating point inputs and generates a floating point output will be referred to herein as a floating point product of power functions.

Generating hardware (e.g. integrated circuit) to implement a floating point product of power functions typically includes developing a hardware design that describes the structure and/or function of an integrated circuit that implements the floating point product of power functions; verifying or testing the hardware design to ensure that the integrated circuit manufactured according to the design will behave as expected; and once verified, manufacturing an integrated circuit, at an integrated circuit manufacturing system, in accordance with the hardware design.

A property (e.g., error requirement or correctness) of a hardware design may be verified, for example, via formal verification or simulation-based verification. Formal verification is a systematic process that uses a mathematical model of the hardware design and mathematical reasoning to verify a property of the hardware design. In contrast, simulation-based verification is a process in which a hardware design is tested by applying stimuli to an instantiation of the hardware design and monitoring the output of the hardware design in response to the stimuli.

In formal verification, the hardware design is transformed into a mathematical model (e.g. a state-transition system, or a flow graph) to thereby provide an instantiation of the hardware design which can be tested to verify the hardware design, and formal properties to be verified are expressed using mathematical logic using a precise syntax or a language with a precise mathematical syntax and semantics.

Formal verification is performed using a formal verification tool (i.e., a software tool that is capable of performing formal verification of a hardware design). Formal verification tools include, but are not limited to, formal property checkers such as OneSpin 360 DV™, Mentor Graphics Questa® Formal Verification, Synopsys® VC Formal, Cadence® Incisive® Enterprise Verifier, and JasperGold®; and formal equivalence checkers (which may also be referred to as formal model checkers) such as Synopsys® HECTOR™, and Synopsys® VC Formal DPV (Datapath Validation) and other logical equivalence checkers (LECs) and sequential logical equivalence checkers (SLECs).

Formal verification can improve controllability as compared to simulation-based verification. Low controllability occurs when the number of simulation test signals or vectors required to thoroughly simulate a hardware design becomes unmanageable. For example, a 32-bit comparator requires $2^{64}$ test vectors. This may take millions of years to verify exhaustively by simulation-based verification. By performing formal verification, the 32-bit comparator can be verified in less than a minute.

While formal verification can be an effective method for exhaustively verifying properties of a hardware design, this is only true if the properties that are to be verified are presented in such a manner that a formal verification tool can solve the problem presented thereby. Specifically, during formal verification of a hardware design the hardware design is represented as a mathematical model, the properties to be proved are also represented mathematically, and mathematical reasoning is used to determine if the properties are true for the hardware design based on the mathematical model. In other words, in formal verification the verification is presented as a problem to be solved. Some problems will be solvable within a reasonable amount of time by a formal verification tool whereas others will not. When a formal verification tool is able to solve the problem presented by the hardware design and the properties to be verified then the formal verification is said to converge. When, however, a formal verification tool is unable to solve the problem presented by the hardware design and the properties to be verified, then the formal verification does not converge, and (in some cases) no results are output, and the verification is inconclusive.

The embodiments described below are provided by way of example only and are not limiting of implementations which solve any or all of the disadvantages of known methods for verifying a hardware design for an integrated circuit that implements a floating point product of power functions.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Described herein are methods and systems for verifying a property of a hardware design for an integrated circuit to implement a product of power functions of the form $x_0{}^{t_0} \times ... \times x_n{}^{t_n}$, wherein $t_0 \cdots t_n$ are fixed, rational numbers, $x_0 \cdots x_n$ are floating point inputs, and n is an integer greater than, or equal to, one. The methods include: performing a first verification phase which comprises formally verifying that, for any first non-exception input set $X = X_0, ... , X_n$ and any second non-exception input set $Y = Y_0, ... , Y_n$ in an input space wherein corresponding inputs have a same mantissa and $(t_0 X_{0.exp} + \cdots + t_n X_{n.exp}) - (t_0 Y_{0.exp} + \cdots + t_n Y_{n.exp})$ is an integer, an instantiation of the hardware design generates outputs $X'$ and $Y'$ with a same mantissa and $X'_{exp} - (t_0 x_{0.exp} + \cdots + t_n X_{n.exp}) = Y'_{exp} - (t_0 Y_{0 \cdot exp} + \cdots + t_n Y_{n.exp})$; and performing a second verification phase which comprises verifying the property for the hardware design for a subset of input sets in the input space, the subset of input sets selected based on exponents sets wherein $(t_0 X_{0.exp} + \cdots + t_n X_{n.exp}) - (t_0 Y_{0.exp} + \cdots + t_n Y_{n.exp})$ is an integer. The notation "*exp*" denotes an exponent of an input or an output.

A first aspect provides a computer-implemented method of verifying a property of a hardware design for an integrated circuit to implement a product of power functions of the form $x_0{}^{t_0} \times ... \times x_n{}^{t_n}$, wherein $t_0 \cdots t_n$ are fixed, rational numbers, $x_0 \cdots x_n$ are floating point inputs, and n is an integer greater than, or equal to, one, the method comprising, in one or more processors: performing a first verification phase which comprises formally verifying that, for any first non-exception input set $X = X_0, \ldots, X_n$ and any second non-exception input set $Y = Y_0, \ldots, Y_n$ in an input space wherein corresponding inputs have a same mantissa and $(t_0 X_{0.exp} + \cdots + t_n X_{n.exp}) - (t_0 Y_{0.exp} + \cdots + t_n Y_{n.exp})$ is an integer, an instantiation of the hardware design generates outputs $X'$ and $Y'$ with a same mantissa and $X'_{exp} - (t_0 X_{0.exp} + \cdots + t_n X_{n.exp})$ = $Y'_{exp} - (t_0 Y_{0.exp} + \cdots + t_n Y_{n.exp})$; and performing a second verification phase which comprises verifying the property for the hardware design for a subset of input sets in the input space, the subset of input sets selected based on exponent sets wherein $(t_0 X_{0.exp} + \cdots + t_n X_{n.exp}) - (t_0 Y_{0.exp} + \cdots + t_n Y_{n.exp})$ is an integer; wherein *exp* denotes an exponent of an input or an output.

The exponent sets for the input space may be divisible into one or more groups of exponent sets wherein $(t_0 X_{0.exp} + \cdots + t_n X_{n.exp}) - (t_0 Y_{0.exp} + \cdots + t_n Y_{n.exp})$ is an integer, the subset of input sets may comprise input sets with a subset of exponent sets, and the subset of exponent sets may comprise one exponent set from each of the one or more groups of exponent sets.

The floating point product of power functions may be of the form $(x_0^1 \times x_1^{-1})$ and the subset of exponent sets may comprise a single exponent set.

The single exponent set may comprise exponents that are equal to a bias of the floating point input format.

The exponent sets for the input space may be divisible into one or more groups of exponent sets wherein $X_{i.exp} - Y_{i.exp}$ is an integer multiple of $1/t_i$ for all $i \in \{0, 1, \ldots, n\}$, the subset of input sets may comprise input sets with a subset of exponent sets, and the subset of exponent sets may comprise one exponent set from each of the one or more groups of exponent sets.

The integrated circuit may implement a symmetric rounding mode, the input space may comprise all non-exception input sets, and performing the first verification phase may comprise: formally verifying that, for any pair of input sets in the input space in which the corresponding inputs have the same absolute value, an instantiation of the hardware design generates outputs that match in all bits except the sign bit; and formally verifying that, for any first non-exception positive input set $X = X_0, \ldots, X_n$ and any second non-exception positive input set $Y = Y_0, \ldots, Y_n$ in the input space wherein corresponding inputs have a same mantissa and $(t_0 X_{0.exp} + \cdots + t_n X_{n.exp}) - (t_0 Y_{0.exp} + \cdots + t_n Y_{n.exp})$ is an integer, an instantiation of the hardware design generates outputs $X'$ and $Y'$ with a same mantissa and $X'_{exp} - (t_0 X_{0.exp} + \cdots + t_n X_{n.exp}) = Y'_{exp} - (t_0 Y_{0.exp} + \cdots + t_n Y_{n.exp})$.

The integrated circuit may implement an asymmetric rounding mode, the input space may comprise input sets that generate positive outputs, and the method may further comprise: formally verifying that, for any first non-exception input set $X = X_0, \ldots, X_n$ and any second non-exception input set $Y = Y_0, \ldots, Y_n$ in a second input space wherein corresponding inputs have a same mantissa and $(t_0 X_{0.exp} + \cdots + t_n X_{n.exp}) - (t_0 Y_{0.exp} + \cdots + t_n Y_{n.exp})$ is an integer, an instantiation of the hardware design generates outputs $X'$ and $Y'$ with a same mantissa and $X'_{exp} - (t_0 X_{0.exp} + \cdots + t_n X_{n.exp})$ = $Y'_{exp} - (t_0 Y_{0.exp} + \cdots + t_n Y_{n.exp})$; wherein the second input space may comprise input sets that generate negative outputs.

The method may further comprise verifying that an instantiation of the hardware design generates an output with a correct sign in response to any input set.

The method may further comprise verifying that an instantiation of the hardware design generates expected outputs in response to exception input sets.

The method may further comprise verifying that an instantiation of the hardware design produces exception outputs in response to certain non-exception input sets.

The property of the hardware design may be a unit of last precision error requirement.

The property of the hardware design may be a relative error requirement, a particular rounding mode, or monotonicity.

The property of the hardware design may be that the hardware design is equivalent to another hardware design to implement the floating point product of power functions.

When the hardware design is processed at an integrated circuit manufacturing system, the hardware design may configure the integrated circuit manufacturing system to manufacture the integrated circuit to implement the product of power functions.

The method may further comprise, in response to the verifications being successful, generating, at an integrated circuit manufacturing system, the integrated circuit to implement the product of power functions based on the hardware design.

The method may further comprise, in response to at least one of the verifications not being successful, modifying the hardware design.

The method may further comprise performing the first and second verification stages for the modified hardware design.

The method may further comprise, in response to the verifications being successful, encoding on a computer readable storage medium the verified hardware design which, when processed in an integrated circuit manufacturing system, may configure the integrated circuit manufacturing system to manufacture the integrated circuit to implement the floating point product of power functions.

A second aspect provides a system for verifying a property of a hardware design for an integrated circuit to implement a product of power functions of the form $x_0^{t0} \times ... \times x_n^{tn}$, wherein $t_0 \cdots t_n$ are fixed, rational numbers, $x_0 \cdots x_n$ are floating point inputs, and n is an integer greater than, or equal to, one, the system comprising: one or more verification tools comprising a formal verification tool, the one or more verification tools configured to: perform a first verification phase which comprises formally verifying that, for any first non-exception input set $X = X_0, ... , X_n$ and any second non-exception input set $Y = Y_0, ... , Y_n$ in an input space, wherein corresponding inputs have a same mantissa and $(t_0 X_{0.exp} + \cdots + t_n X_{n.exp}) - (t_0 Y_{0.exp} + \cdots + t_n Y_{n.exp})$ is an integer, an instantiation of the hardware design generates outputs $X'$ and $Y'$ with a same mantissa and $X'_{exp} - (t_0 X_{0.exp} + \cdots + t_n X_{n.exp}) = Y'_{exp} - (t_0 Y_{0.exp} + \cdots + t_n Y_{n.exp})$; and perform a second verification phase which comprises verifying the property for the hardware design for a subset of input sets in the input space, the subset of input sets selected based on exponents sets wherein $(t_0 X_{0.exp} + \cdots + t_n X_{n.exp}) - (t_0 Y_{0.exp} + \cdots + t_n Y_{n.exp})$ is an integer; wherein *exp* denotes an exponent of an input or an output.

There may be provided a method of manufacturing, at an integrated circuit manufacturing system, an integrated circuit to implement a floating point product of power functions. There may be provided an integrated circuit definition dataset that, when processed in an integrated circuit manufacturing system, configures the system to manufacture an integrated circuit to implement a floating point product of power functions. There may be provided a non-transitory computer readable storage medium having stored thereon a computer readable description of an integrated circuit to implement a floating point product of power functions that, when processed in an integrated circuit manufacturing system, causes the integrated circuit manufacturing system to manufacture the integrated circuit.

There may be provided an integrated circuit manufacturing system comprising: a non-transitory computer readable storage medium having stored thereon a computer readable description of an integrated circuit to implement a floating point product of power functions; a layout processing system configured to process the computer readable description so as to generate a circuit layout description of the integrated circuit; and an integrated circuit generation system configured to manufacture the integrated circuit according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

BRIEF DESCRIPTION OF THE DRAWINGS

Examples of the invention will be described with reference to the following drawings, in which:

FIG. 1 is a schematic diagram of an integrated circuit to implement a floating point product of power functions;

FIG. 2 is a flow diagram of an example method of verifying a property of a hardware design for an integrated circuit to implement a floating point product of power functions;

FIG. 3 is a block diagram of an example system for verifying a property of a hardware design for an integrated circuit to implement a floating point product of power functions using the method of FIG. 2;

FIG. 4 is a block diagram of an example computing-based device;

FIG. 5 is a block diagram of an example computer system in which an integrated circuit to implement a floating point product of power functions may be implemented; and

FIG. 6 is a block diagram of an example integrated circuit manufacturing system which may be used to generate an integrated circuit to implement a floating point product of power functions.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

Described herein are methods of verifying a property of a hardware design for an integrated circuit to implement a floating point product of power functions.

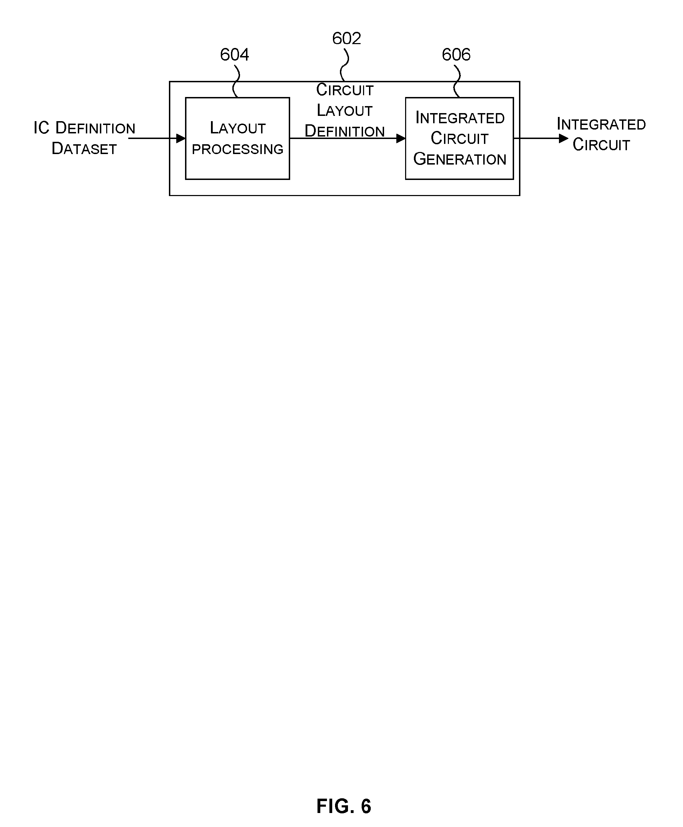

A hardware design for an integrated circuit, which may be referred to herein simply as a hardware design, is a description of the structure and/or function of an integrated circuit which, when processed at an integrated circuit manufacturing system, causes the integrated circuit manufacturing system to generate an integrated circuit described by the hardware design. For example, as described in more detail below with respect to FIG. 6, when a hardware design is processed at an integrated circuit manufacturing system the integrated circuit manufacturing system may generate the integrated circuit by synthesizing the hardware design into silicon, or, by loading configuration data into a field-programmable gate array (FPGA).

A hardware design may be implemented in a high-level hardware description language (HDL), such as, but not limited to, a register transfer level (RTL) language. Examples of register transfer level languages include, but are not limited to, VHDL (VHSIC Hardware Description Language) and Verilog®. It will be evident to a person of skill in the art that other high-level hardware description languages may be used such as proprietary high-level hardware description languages.

An "instantiation of a hardware design" is a representation of the hardware and/or functionality of the hardware defined by the hardware design. An instantiation of a hardware design includes, but is not limited to, an emulation model of the hardware design that mimics or reproduces the behavior of the hardware defined by the hardware design, a synthesized version (e.g. netlist) of the hardware design, a hardware implementation (e.g. integrated circuit or a field-programmable gate array (FPGA)) of the hardware design, and a mathematical model of the hardware design generated by a formal verification tool. An instantiation of the hardware design embodies the hardware design in a form which can be tested to verify the hardware design.

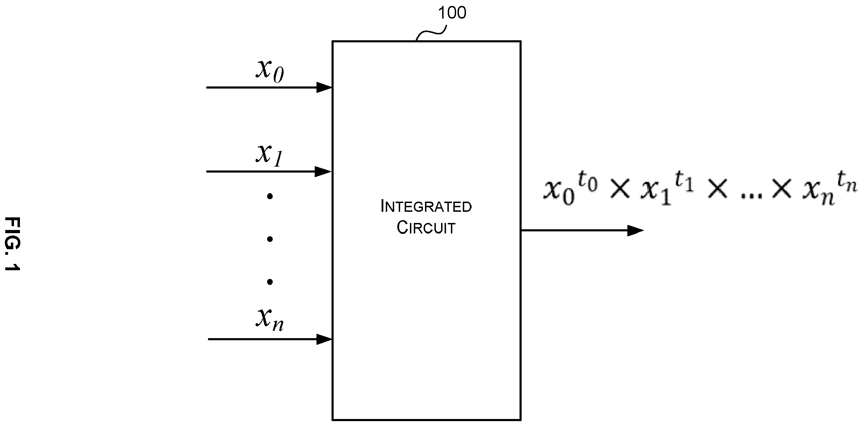

A hardware design for an integrated circuit to implement a floating point product of power functions is thus a description of the structure and/or function of an integrated circuit 100 (FIG. 1) to implement the floating point product of power functions, which, when processed at an integrated circuit manufacturing system causes the integrated circuit manufacturing system to generate an integrated circuit that implements the floating point product of power functions. As described above, a floating point product of power functions is configured to receive at least two floating point inputs and generate a floating point output therefrom in accordance with the product of power functions. Accordingly, a hardware design for an integrated circuit 100 to implement a floating point product of power functions includes a description of the structure and/or function of an integrated circuit to calculate a floating point output based on at least two floating point inputs in accordance with the product of power functions.

A property of a hardware design for an integrated circuit is a requirement or behavior that the hardware design is to satisfy. Example properties which may be verified for a hardware design to implement a floating point product of power functions include, but are not limited to: (i) correctness (e.g. an instantiation of a hardware design produces the correct output in accordance with the product of power functions); (ii) rounding mode (e.g. an instantiation of the hardware design correctly implements a particular rounding mode); (iii) monotonicity (as is known to those of skill in the art, a function is said to be monotonic if and only if it is entirely increasing or decreasing); (iv) two hardware designs for a floating point product of power functions always produce the same result or output; (v) one hardware design for a floating point product of power functions always produces or outputs a value that is less than (or greater than) the value produced or output by another hardware design for a floating point product of power functions for the same input; and (vi) that two different hardware designs for floating point product of power functions produce outputs that differ at most by a certain ulp or relative value.

As described above, formal verification can be an effective method for exhaustively verifying properties of a hardware design. However, this is only true if the properties that are to be verified are presented in such a manner that a formal verification tool can solve the problem presented thereby. The naive method to verify a property (e.g. correctness) of a hardware design is to simply define the property that is to be verified in terms of the signals and/or hardware components (e.g. registers) of the hardware design in a formal verification language using, for example, an assertion or lemma; and use a formal verification tool to verify that the assertion (or lemma) is true for the hardware design for all valid input values. For example, if the property that is to be verified is that signal $a$ is always equal to signal b then an assertion may be defined in a formal verification language that states that $a == b,$ then a formal verification tool may be configured to verify, using a mathematical model of the hardware design, that the property is true for the hardware design for all valid inputs. However, formally verifying properties of hardware designs in this naive manner has proved difficult for hardware designs that implement a floating point product of power functions due the large input space these hardware designs can have, and due to the complex floating point operations that the formal verification tool has to perform to verify a property.

Accordingly, described herein are methods and systems for verifying a property of a hardware design for an integrated circuit to implement a floating point product of power functions in which the verification is divided into two phases. Specifically, in a first verification phase, it is formally verified that the outputs, produced by an instantiation of the hardware design in response to pairs of non-exception input sets in a first input space which have a first predetermined relationship, have a second predetermined relationship. The term "input set" for a floating point product of power functions is used herein to mean a set comprising a floating point value for each floating point input to the product of power functions. For example, if a floating point product of power functions has two floating point inputs ($x_0$, $x_1$), an input set for that product of power functions comprises a floating point value for $x_0$ and a floating point value for $x_1$. If the first verification phase is successful, it is known that if the hardware design satisfies a property for a first non-exception input set in the first input space, then the property will also be true for any input set in the first input space that has the first predetermined relationship with the first input set. Then, in the second verification phase the property is explicitly verified, for example, in the naive manner, for only a subset of the valid input sets.

Accordingly, performing the first verification phase verification reduces the number of verifications that are performed in the second verification phase. Verifying a property of a hardware design for an integrated circuit to implement a floating point product of power functions in this manner significantly increases the likelihood that the verification converges. In other words, verifying a property of a hardware design for an integrated circuit that implements a floating point product of power functions in this manner significantly increases the likelihood of getting a conclusive verification result.

In the examples described herein the first predetermined relationship between inputs sets is that the mantissas of corresponding inputs are the same, as shown in equation (3), and that the exponents are related as shown in equation (4), wherein $X$ represents a first input set for the product of power functions (i.e. $X = \{X_0, \dots, X_n\}$ wherein $X_i$ is a floating point value with a mantissa $X_{i.mant}$ and exponent $X_{i.exp}$) and $Y$ represents a second input set for the product of power functions (i.e. $Y = \{Y_0, \dots, Y_n\}$ wherein $Y_i$ is a floating point value with a mantissa $Y_{i.mant}$ and exponent $Y_{i.exp}$). Equation (4) specifies that the difference between the weighted sum of the exponents in the first input set and the weighted sum of the exponents in the second input set is an integer, wherein the weight for an exponent is the corresponding $t_i$. Specifically, the exponent for the $i^{th}$ input in an input set will be weighted by $t_i$ (e.g., the exponent for the $0^{th}$ input in an input set will be weighted by $t_0$).

$$X_{i.mant} = Y_{i.mant} \text{ for all } i \in \{0,1,\dots,n\} \qquad (3)$$

$$\left(t_0 X_{0.exp} + \dots + t_n X_{n.exp}\right) - \left(t_0 Y_{0.exp} + \dots + t_n Y_{n.exp}\right) = integer \qquad (4)$$

As explained in more detail below, the inventors have identified that when two input sets ($X$, $Y$) have the predetermined relationship set out in equations (3) and (4), then the corresponding outputs of the product of power functions ($X'$, $Y'$) will be a product of 2 which will be represented in the output exponents, not the output mantissas. This means that the mantissa of the outputs should be the same, as shown in equation (5), and the exponents of the outputs should be related as shown in equation (6).

$$X'_{mant} = Y'_{mant} \qquad (5)$$

$$X'_{exp} - \left(t_0 X_{0.exp} + \dots + t_n X_{n.exp}\right) = Y'_{exp} - \left(t_0 Y_{0.exp} + \dots + t_n Y_{n.exp}\right) \qquad (6)$$

Accordingly, the first verification phase comprises verifying, that for any two non-exception input sets in an input space that satisfy equations (3) and (4), that an instantiation of the hardware design generates outputs which satisfy equations (5) and (6). Since verifying equations (5) and (6) involves verifying integer properties, rather than more complex floating point properties, such verification can be efficiently performed via formal verification.

In these examples, if the first verification phase is successful, it is known that if the hardware design satisfies a property for an input set in the input space with a first exponent set, then the property will be also be true for any input set in the verified input space with an exponent set that has the relationship set out in equation (4) with the first exponent set. Similar to the term "input set", the term "exponent set" is used herein to mean a set comprising an exponent value for each of the floating point inputs to the function. For example, if a floating point product of power functions has two floating point inputs ($x_0$, $x_1$), an exponent set for that product of power functions comprises an exponent value for $x_0$ and an exponent value for $x_1$.

Accordingly, in the second verification phase, the property (e.g., correctness) only needs to be explicitly verified for a subset of the possible exponent sets. Specifically, the property only needs to be explicitly verified for one exponent set in a group of exponent sets that satisfy equation (4) to verify the property for all the exponent sets in the group. For example, if a group of exponent sets comprises a first exponent set $X_{0.exp}, ...,X_{n.exp}$ and a second exponent set $Y_{0.exp}, ..., Y_{n.exp}$ (i.e. $X_{0.exp}, ...,X_{nexp}$ and $Y_{0.exp}, ...,Y_{n.exp}$ satisfy equation (4)) then after the first verification phase, one only has to verify the property (e.g. correctness) for one of the first and second exponent sets to verify the property for both exponent sets. Verifying a property for an exponent set comprises verifying the property for all possible input sets with the exponents in that exponent set - i.e., verifying the property for all possible input mantissa values with the exponents of the inputs fixed to the exponents in the exponent set. For example, if a product of power functions has two floating point inputs ($x_0$, $x_1$), each of which can have a mantissa value of 0 or 1 and exponents in the range of 0 to 7. If an exponent set comprises {5, 6} meaning that the first input has an exponent of 5 and the second input has an exponent of 6 then verifying a property for this exponent set comprises verifying the property for the following four input sets:

- Input Set 1

  ○ $X_{0.mant} = 0$; $X_{0.exp} = 5$; $X_{1.mant} = 0$; $X_{1.exp} = 6$;

- Input Set 2

  ○ $X_{0.mant} = 0$; $X_{0.exp} = 5$; $X_{1.mant} = 1$, $X_{1.exp} = 6$;

- Input Set 3

  ○ $X_{0.mant} = 1$; $X_{0.exp} = 5$; $X_{1.mant} = 0$; $X_{1.exp} = 6$;

- Input Set 4

  ○ $X_{0.mant} = 1$; $X_{0.exp} = 5$; $X_{1.mant} = 1$; $X_{1.exp} = 6$;

Therefore, at a minimum, the input sets that are explicitly verified in the second verification phase comprise input sets in the input space with (i) one exponent set from each group of exponent sets that satisfy equation (4) and (ii) any exponent sets that do not satisfy equation (4) with at least one other exponent set. However, as described in more detail below, for simplicity, the exponent sets that are explicitly verified in the second verification phase may include additional exponent sets.

Accordingly, together the first and second verification phases can be used to verify that a property is true for all non-exception input sets in an input space without having to explicitly verify the property for each non-exception input set in the input space.

It is noted that performing the first and second verification phases for an input space verifies that the property is true for the non-exception inputs in that input space. To verify the property (e.g., correctness) for the hardware design for all valid input sets, one or more additional verifications may be performed as described in more detail below.

As described in more detail below, the methods described herein can be extended to verify the hardware design for exception inputs or exception outputs by verifying that an instantiation of the hardware design generates expected outputs for exception inputs and for non-exception inputs that generate exception outputs using formal verification or simulation-based verification.

The methods and systems described herein can be used to verify that a hardware design for an integrated circuit to implement a floating point product of power functions satisfies a given ulp error, or a relative error, requirement. The methods and systems described herein can also be used to exhaustively verify such hardware designs satisfy a variety of other properties, such as but not limited to, a specific rounding mode or monotonicity.

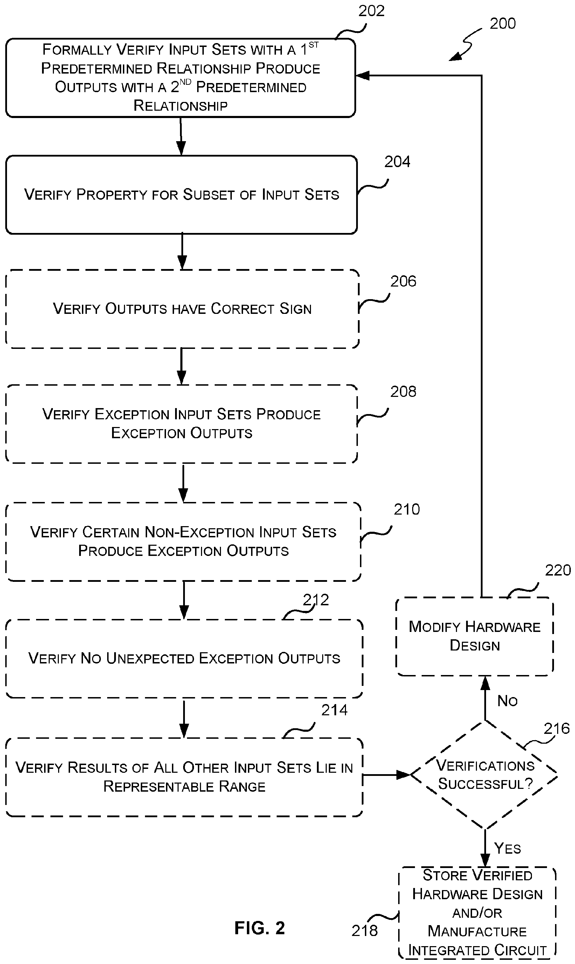

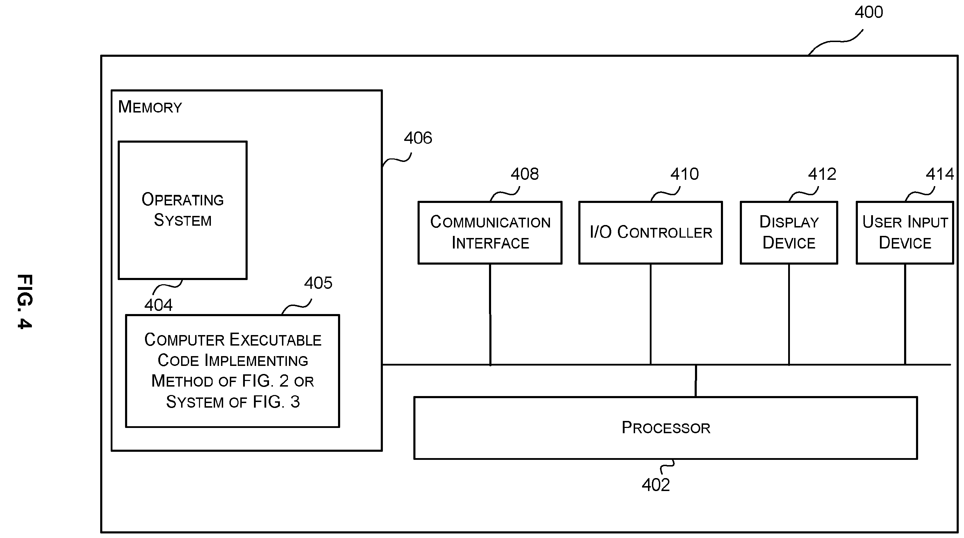

Reference is now made to FIG. 2 which illustrates an example method 200 for verifying a property of a hardware design for an integrated circuit to implement a floating point product of power functions. As described above, a floating point product of power functions is a function of the form $x_0^{t_0} \times ... \times x_n^{t_n}$, where $t_0 \cdots t_n$ are fixed, rational numbers, $x_0 \cdots x_n$ are floating point inputs, and n is an integer greater than, or equal to, one. The method 200 may be implemented by a computing-based device such as, but not limited to, the computing-based device 400 described below with respect to FIG. 4. For example, there may be a computer readable storage medium having stored thereon computer readable instructions that, when executed at a computing-based device, cause the computing-based device to perform the method 200 of FIG. 2.

The method 200 begins at block 202, where a first verification phase is performed. In the first verification phase it is formally verified that, for pairs of non-exception input sets in an input space that have a first predetermined relationship, an instantiation of the hardware design generates outputs with a second predetermined relationship.

In the examples described herein, the first predetermined relationship is that (i) the mantissas of corresponding inputs are the same, as shown in equation (7), and (ii) the exponents are related as shown in equation (8), wherein $X$ represents a first input set for the product of power functions (1) (i.e. $X = \{X_0, \dots, X_n\}$ wherein $X_i$ is a floating point number with a mantissa $X_{i.mant}$ and exponent $X_{i.exp}$) and $Y$ represents a second input set for the product of power functions (i.e. $Y = \{Y_0, \dots, Y_n\}$ wherein $Y_i$ is a floating point number with a mantissa $Y_{i.mant}$ and exponent $Y_{i.exp}$).

$$X_{i.mant} = Y_{i.mant} \text{ for all } i \in \{0,1,\dots,n\} \qquad (7)$$

$$\left(t_0 X_{0.exp} + \cdots + t_n X_{n.exp}\right) - \left(t_0 Y_{0.exp} + \cdots + t_n Y_{n.exp}\right) = integer \qquad (8)$$

In the examples described herein the second predetermined relationship between the outputs ($X'$, $Y'$) is that (i) the output mantissas are the same as shown in equation (9), and (ii) the exponents of the outputs are related as shown in equation (10).

$$X'_{mant} = Y'_{mant} \qquad (9)$$

$$X'_{exp} - \left(t_0 X_{0.exp} + \cdots + t_n X_{n.exp}\right) = Y'_{exp} - \left(t_0 Y_{0.exp} + \cdots + t_n Y_{n.exp}\right) \qquad (10)$$

In other words, in the examples described herein block 202 of the method comprises verifying that, for pairs of input sets in an input space that satisfy equations (7) and (8), an instantiation of the hardware design generates outputs that satisfy equations (9) and (10).

Formally verifying that for pairs of non-exception input sets in an input space which satisfy equations (7) and (8), an instantiation of the hardware designs generates outputs which satisfy equations (9) and (10) may comprise generating a test bench in a formal verification language, such as, but not limited to SVA, comprising one or more assertions to be verified and one or more constraints (e.g. assumptions) and/or modelling logic; linking the test bench to the hardware design (and optionally a high level model of the hardware design); and formally verifying, using a formal verification tool, that the one or more assertions are true (or hold) for the hardware design under the constraints, and outputting one or more signals indicating whether the one or more assertions were successfully verified. Example assertions will be described below.

As is known to those of skill in the art, an assertion (which may be referred to as a "lemma" in some programming languages and tools, such as Synopsys' HECTOR and Synopsys' VC Formal DPV) is a statement that a particular property is expected to hold for a hardware design (i.e., is always true). An assertion of the form "assert property [evaluable expression]" is said to "assert" the property specified by the "evaluable expression". If an asserted property (e.g., the evaluable expression) is evaluated to be false for the hardware design for any valid input the hardware design is not behaving as expected and there is an error. For example, in the example assertion "assert property $a = b$"; if $a$ is not equal to $b$ at any point then the hardware design is not behaving as expected and there is an error.

Assertions are used to capture required temporal and combinational behaviour of the hardware design in a formal and unambiguous way. The hardware design can then be verified to determine that it conforms to the requirement as captured by the assertion(s). Since assertions capture the hardware design behaviour on a cycle-by-cycle basis they can be used to verify intermediate behaviours.

Assertions are typically expressed in an assertion language. An assertion language, which may also be referred to as a property language or a formal verification language, captures the hardware design behaviour spread across multiple hardware design cycles (e.g., clock cycles) in a concise, unambiguous manner. While traditional hardware description languages (HDL), such as an RTL language, have the ability to capture individual cycle behaviour, they are too detailed to describe properties at a higher level. In particular, assertion languages provide means to express temporal relationships and complex hardware design behaviours in a concise manner. Assertion languages include, but are not limited to, System Verilog Assertions (SVA), Property Specification Language (PSL), Incisive Assertion Library (IAL), Synopsys OVA (OpenVera Assertions), Symbolic Trajectory Evaluation (STE), SystemC Verification (SCV), 0-In, Specman, and OpenVera Library (OVL).

The test bench (including the one or more assertions and one or more constraints) may be linked to the hardware design by incorporating the test bench into the hardware design or binding the test bench to the hardware design. Specifically, the test bench may be bound to the relevant signals of the hardware design to monitor the inputs and/or outputs of the hardware design.

Once the test bench has been linked to the hardware design, the hardware design, the test bench, and the bindings are loaded into a formal verification tool and the formal verification tool is configured to verify that the one or more assertions are true for the hardware design under any constraints.

An assertion is verified by searching the entire reachable state space of the instantiation of the hardware design (e.g., state-transition system, or flow graph) without explicitly traversing all the states. The search is done by, for example, encoding the states using efficient Boolean encodings using Binary decision diagrams (BDDS), or using advanced SAT (satisfiability-based bounded model checking) based techniques. In some cases, tools can be used to implement techniques, such as, but not limited to, abstraction, symmetry, symbolic indexing, and invariants to improve performance and achieve scalability. Since formal verification of a property algorithmically and exhaustively explores all valid input values over time, verifying a property in this manner allows a property to be exhaustively proved or disproved for all valid states.

Where a hardware design implements a floating point product of power functions using a symmetric rounding mode then equations (9) and (10) will be true for all non-exception inputs - i.e., for negative and positive outputs - that satisfy equations (7) and (8). Accordingly, in some cases, performing the first verification phase may comprise explicitly verifying that equations (9) and (10) are true for all pairs of input sets that satisfy equations (7) and (8). However, in other cases, instead of explicitly verifying equations (9) and (10) are true for all pairs of input sets that satisfy equations (7) and (8), it may be verified that for any pair of input sets in which corresponding inputs have the same absolute value (but may have different signs) that an instantiation of the hardware design generates outputs that match in all bits except for the sign. This shows that if the hardware design satisfies a property for inputs which are all positive it will also satisfy the property for inputs with a mixture of signs. Then it only needs to be explicitly verified that equations (9) and (10) are true for pairs of positive input sets that satisfy equations (7) and (8).

Where, however, a hardware design implements a floating point product of power functions using a non-symmetrical or asymmetrical rounding mode then equations (9) and (10) will be true for input sets that satisfy equation (7) and (8) and that produce positive outputs and separately true for input sets that satisfy equations (7) and (8) and produce negative outputs. In these cases, it may be verified that equations (9) and (10) are true for all pairs of input sets that satisfy equations (7) and (8) and generate positive outputs, and it may be separately verified that that equations (9) and (10) are true for all pairs of input sets that satisfy equations (7) and (8) and generate negative outputs.

As described above, since verifying equations (9) and (10) involves verifying integer properties, rather than more complex floating point properties, such verification can be efficiently performed via formal verification.

Once the first verification phase has been completed, the method 200 proceeds to block 204.

At block 204, a second verification phase is performed. In the second verification phase it is verified that the property is true for a subset of the non-exception input sets in the input space.

A floating point product of power functions will have one or more groups of two or more exponent sets which satisfy equation (8). A group of exponent sets is considered to satisfy equation (8) if each exponent set in the group satisfies equation (8) with respect to each other exponent set in the group. A floating point product of power functions may also have none, one or more than one exponent set which does not satisfy equation (8) with at least one other exponent set. The subset of input sets for which the property is explicitly verified may comprise input sets with (i) one exponent set from each group of exponent sets which satisfy equation (8), and (ii) input sets with exponent sets which do not satisfy equation (8) with at least one other exponent set. However, for convenience or simplicity, the subset may include more input sets.

The phrase "input sets with a particular exponent set" is intended to mean all input sets in an input space in which the inputs have the exponents in the exponent set - e.g., it is intended to include all input sets with all non-exception mantissa values, but the exponent values of the inputs are fixed to the corresponding exponents in the exponent set.

In some cases, it may be straightforward to identify the one or more groups of exponent sets in the input space which satisfy equation (8). For example, where the floating point product of power functions is a division function (i.e., $x_0^1 \times x_1^{-1}$) any pair of exponent sets will satisfy equation (8). Thus, for a division function there is only one group of exponent sets to which all exponent sets form part of. This means that it is sufficient in block 204 to verify the property for only one exponent set. The inventors have identified that verifying the property for an exponent set in which each exponent in the set is equal to the bias works particularly well (i.e., $x_{0.exp}$, $x_{1.exp} = bias$).

However, for larger floating point product of power functions (e.g., functions with more inputs or terms), determining how the exponent sets are divided into groups of exponent sets that satisfy equation (8) may be more complex. It will be evident to a person of skill in the art that equation (8) will be satisfied when equation (11) is true:

$$X_{i.exp} - Y_{i.exp} \text{ is an integer multiple of } 1/t_i \text{ for all } i \in \{0,1,\ldots,n\} \qquad (11)$$

Therefore, in some cases, for simplicity, any exponent set (X) that does not satisfy equation (11) with respect to at least one other exponent set (Y) is explicitly verified in the second verification phase.

However, this may result in a number of "extra" exponent sets being verified. For example, if the denominators of two or more of the $t_i$'s have factors in common there will be exponent sets that satisfy equation (8), but do not satisfy equation (11). If these can be identified, then fewer exponent sets can be verified in the second verification phase.

For example, equation (12) may be an integer even when equation (11) is not satisfied. Specifically, if the two terms on the right-hand side of equation (12) are written as fractions with the same denominator, and numerators which add up to a multiple of this denominator, then if the denominators share factors it is possible to find complementary terms which add up to a multiple of the denominator but are not themselves a multiple of the original denominators.

$$\left(t_0 X_{0.exp} + t_1 X_{1.exp}\right) - \left(t_0 Y_{0.exp} + t_1 Y_{1.exp}\right) = t_0\left(X_{0.exp} - Y_{0.exp}\right) + t_1\left(X_{1.exp} - Y_{1.exp}\right) \quad (12)$$

For example, equation (13) shows an example floating point product of power functions with two floating point inputs $(x_0, x_1)$ and power exponents 1/6 and 3/4.

$$x_0{}^{1/6} x_1{}^{3/4} \qquad (13)$$

Equation (8) can be expressed as shown in equation (14) for the product of power functions of equation (13).

$$t_0\left(X_{0.exp} - Y_{0.exp}\right) + t_1\left(X_{1.exp} - Y_{1.exp}\right) = \frac{1}{12}\left(2\left(X_{0.exp} - Y_{0.exp}\right) + 9\left(X_{1.exp} - Y_{1.exp}\right)\right) \quad (14)$$

It can be seen that the right-hand side of equation (14) will be an integer if $(X_{1.exp} - Y_{1.exp})$ is a multiple of 2 and $(X_{0.exp} - Y_{1.exp})$ is a multiple of 3 and $(X_{0.exp} - Y_{0.exp})/3 + 3(X_{1.exp} - Y_{1.exp})/2$ is a multiple of 2 (so that the sum is an even multiple of 6). That is, the $(X_{i.exp} - Y_{i.exp})$ are multiples of the factors of 4 and 6 which are not shared (note that 2 goes into 4 twice and into 6 only once so one of the 2s is not shared) and $(X_{o.exp} - Y_{o.exp})13 + 3(X_{1.exp} - Y_{1.exp})/2$ (the expression divided by the unshared factors) is divisible by 2 (which is the shared factor). This is because the denominator is the lowest common multiple of the original denominators so shared factors need not appear in the coefficients (2 and 9 in this case) and the unshared factors must. Hence, to be divisible by the lowest common multiple (lcm), both terms must be divisible by the unshared factors (as they are already divisible by a (disjoint) partition of them). It must be then that the remaining part is divisible by the shared factors. That is $(X_{1.exp} - Y_{1.exp})$ is a multiple of 2 and $(X_{0.exp} - Y_{1.exp})$ is a multiple of 3 and $(X_{0.exp} - Y_{0.exp})/3 + 3(X_{1.exp} - Y_{1.exp})/2$ is a multiple of 2.

It can be seen that this means that if the property is verified for exponent set $X_{0.exp} = 1$ and $X_{1.exp} = 1$, it is known that the property is also true for any exponent set where $Y_{0.exp} \equiv 1 \bmod 6$ and $Y_{1.exp} \equiv 1 \bmod 4$. Therefore it is known that the property is true for the exponent set $Y_{0.exp} = 4$ and $Y_{1.exp} = 3$ and thus it is known that the property is true for any exponent set wherein $Y_{0.exp} \equiv 4 \bmod 6$ and $Y_{1.exp} \equiv 3 \bmod 6$.

Once the second verification phase is complete, the method 200 may end or the method may proceed to block 206, 208, 210, 212 or 214. Specifically, performing the first and second verification phases for an input space verifies that a property (e.g., correctness) is true for the non-exception inputs in an input space based on the mantissa and exponents of the inputs and output. One or more additional verification phases may be performed to verify that an instantiation of the hardware design (i) generates outputs with the correct sign (block 206), (ii) generates expected outputs in response to exception inputs (block 208), (iii) generates exception outputs in response to certain non-exception inputs (block 210); and (iv) no inputs other than those verified in (ii) and (iii) generate exception outputs (block 212).

At block 206, it is verified that an instantiation of the hardware design generates outputs with the correct sign. Specifically, as noted above, the first and second verification phases determine whether a property is correct based on the mantissas and exponents of the inputs and output, but do not take into account the sign of the inputs and output. This allows the verifications in the first and second verification phases to be simplified. It thus may be separately verified that an instantiation of the hardware design will always produce an output with the correct sign.

A product of power functions can be written as a function of the signs of its inputs as shown in equation (15) where $|x_i|$ is the absolute value of $x_i$ and $s_i$ is the sign of $x_i$, where $s_i = -1$ when $x_i$ is negative and $s_i = +1$ when $x_i$ is positive.

$$x_0{}^{t_0} \times ... \times x_n{}^{t_n} = \left(s_0{}^{t_0} \times ... \times s_n{}^{t_n}\right) \times |x_0|^{t_0} \times ... \times |x_n|^{t_n} \quad (15)$$

It can be seen from equation (15) that the output should be positive if equation (16) is true and negative if equation (17) is true.

$$s_0{}^{t_0} \times ... \times s_n{}^{t_n} = 1 \qquad (16)$$

$$s_0{}^{t_0} \times ... \times s_n{}^{t_n} = -1 \qquad (17)$$

Accordingly, verifying that an instantiation of the hardware design generates outputs with the correct sign may comprise verifying that the output is positive if equation (16) is true and that the output is negative if equation (17) is true. The verification may be performed using any suitable verification method such as, but not limited to, formal verification or simulation-based verification. However, in some cases the size of the input space may make verification via simulation intractable.

Formally verifying that an instantiation of the hardware design generates outputs with the correct sign may comprise generating a test bench in a formal verification language, such as, but not limited to SVA, comprising one or more assertions which if verified to be true verify that the output is positive if equation (16) is true and that the output is negative if equation (17) is true and optionally one or more constraints (e.g. assumptions) and/or modelling logic; linking the test bench to the hardware design (and optionally a high level model of the hardware design); and formally verifying, using a formal verification tool, that the one or more assertions are true (or hold) for the hardware design under the constraints, and outputting one or more signals indicating whether the one or more assertions were successfully verified. Example assertions will be described below.

Once it has been verified that an instantiation of the hardware design generates outputs with the correct sign, the method 200 may end or the method may proceed to block 208, 210, 212 or 214.

At block 208, it is verified that the hardware design correctly handles exception inputs. Specifically, as described above, the first and second verification phases described with respect to blocks 202 and 204 verify a property for non-exception inputs in an input space, they do not verify how an instantiation of the hardware design handles exception inputs.

As is known to those of skill in the art, an exception input is an input which requires special processing. Exceptions may occur for floating point inputs when the exponent is all zeros or all ones. Example exception types for floating point inputs include: zero, denormal, positive infinity, negative infinity, and NaN (not a number). A zero may be defined as a floating point number where the exponent and mantissa are both equal to zero. A denormal may be defined as a floating point number where the exponent is zero, but the mantissa is non-zero. An infinity may be defined as a floating point number where the exponent is equal to all ones and the mantissa is equal to zero. NaN is a numerical data type value representing an undefined or unrepresentable value and may be defined as a floating point number where the exponent is equal to all ones and the mantissa is non-zero. In some implementations special NaNs have a predefined mantissa value.

For all types of exceptions, the sign bit indicates whether the exception is positive or negative. It will be evident to a person of skill in the art that these are example exceptions only and a hardware design to implement a floating point product of power functions may deal with all of the example exceptions, none of the example exceptions or other exceptions in combination with or instead of the example exceptions.

Hardware designs may be designed to output a specific value (e.g., an exception) in response to an exception input. Exception inputs and their expected output may be defined in the specification for the hardware design and can be easily extracted therefrom. Verifying a hardware design to ensure that the hardware design handles exception inputs as expected may comprise verifying that when an instantiation of the hardware design receives an input of a certain exception type it produces the expected output. The verification may be performed using any suitable verification method such as, but not limited to, formal verification or simulation-based verification. However, in some cases, the size of the input space may make verification via simulation intractable.

Formally verifying that an instantiation of the hardware design generates expected outputs in response to exception inputs may comprise generating a test bench in a formal verification language, such as, but not limited to SVA, comprising one or more assertions and optionally one or more constraints (e.g. assumptions) and/or modelling logic; linking the test bench to the hardware design (and optionally a high level model of the hardware design); and formally verifying, using a formal verification tool, that the one or more assertions are true (or hold) for the hardware design under the constraints, and outputting one or more signals indicating whether the one or more assertions were successfully verified.

An assertion for a specific type of exception input (e.g., zero, positive infinity, negative infinity, denormal, NaN) may state or assert that when the input is of the specific exception type (e.g., zero, positive infinity, negative infinity, denormal, NaN) then the output has a specific format (e.g., is a specific exception type). For example, an assertion may state that when a zero input is received a zero is output. Example assertions for verifying that a hardware design produces expected outputs in response to exception inputs will be described below.

Once the processing of exception inputs by the hardware design has been verified the method 200 may end or the method may proceed to block 210, 212 or 214.

At block 210, it is verified that an instantiation of the hardware design generates an exception output in response to certain non-exception input sets as set out in the specification for the hardware design.

As described above, an exception output may be produced in response to an exception input. However, an exception output may also be produced in response to certain non-exception input sets because these inputs cannot be properly processed by the hardware design. For example, very small input values and very large input values may cause overflow (the result of the floating point operation is larger than the largest positive value or smaller than the smallest negative value) or underflow (the result of the floating point operation is smaller than the smallest positive value, or larger than the largest negative value).

The verification may be performed using any suitable verification method such as, but not limited to, formal verification or simulation-based verification. However, in some cases the size of the input space may make verification via simulation intractable.

Formally verifying that an instantiation of the hardware design generates exception outputs in response to certain non-exception input sets may comprise generating a test bench in a formal verification language, such as, but not limited to SVA, comprising one or more assertions and optionally one or more constraints (e.g. assumptions) and/or modelling logic; linking the test bench to the hardware design (and optionally a high level model of the hardware design); and formally verifying, using a formal verification tool, that the one or more assertions are true (or hold) for the hardware design under the constraints, and outputting one or more signals indicating whether the one or more assertions were successfully verified.

The one or more assertions may state that if an instantiation of the hardware design receives a certain non-exception input set it generates a particular exception output. Example assertions for verifying that a hardware design produces exception outputs in response to certain non-exception input sets as expected are described below.

Once it has been verified that an instantiation of the hardware design generates exception outputs in response to certain non-exception input sets the method 200 may end or the method may proceed to block 212 or 214.

At block 212, it is verified that that no input values, other than those identified in the specification, produce an exception output. The verification may be performed by formally verifying an assertion that states that when the hardware design receives any input set, other than those identified in blocks 208 (exception input sets) and 210 (non-exception input sets that produce exception outputs), that the resulting output will not be an exception. An example assertion for formally verifying that no input values, other than those identified in the specification produce an exception output will be described below.

Once it has been verified that an instantiation of the hardware design does not generate exception outputs in response to input sets other than the input sets identified in blocks 208 and 210 then the method may end, or the method may proceed to block 214.

At block 214, it is verified that the infinitely precise result to the floating point product of power functions for all remaining inputs (non-exception inputs that do not produce an exception output) lies between the smallest and largest representable normal values of the floating point output. Once it has been verified that all other inputs lie within between the smallest and largest representable normal values of the floating point output, the method 200 may end or the method 200 may proceed to block 216.

At block 216, a determination may be made as to whether the verifications in the previous blocks were successful (e.g., blocks 202 to 214). As described above, when a formal verification tool is used to verify an assertion for a hardware design, the formal verification tool may output a signal or a set of signals that indicates whether or not the assertion is valid (i.e., the asserted property is true for all valid states or sequence of states). In these cases, the determination as to whether the verifications were successful may be based on the output signal(s).

If it is determined that the verifications were successful (indicating that an instantiation of the hardware design will work as expected) the method 200 may proceed to block 218 where the verified hardware design is encoded or stored on a computer readable storage medium, which when processed at an integrated circuit manufacturing system, such as the integrated circuit manufacturing system described with respect to FIG. 6, configures the integrated circuit manufacturing system to manufacture an integrated circuit to implement the floating point product of power functions. In some cases, an integrated circuit described by the hardware design may then be manufactured at an integrated circuit manufacturing system, such as that described below with respect to FIG. 6, from the computer readable storage medium. If, however, it is determined that one or more of the verifications performed in blocks 202 to 214 was not successful then the method 200 may proceed to block 220.

At block 220, the hardware design is modified to correct the error in the hardware design that caused the verification(s) to fail. In some cases, if an assertion fails, the formal verification tool may indicate a state or sequence of states of the instantiation of the hardware design which caused the asserted property to fail (e.g., a counter example). In these cases, the information indicating a state or sequence of states of the hardware design which caused an asserted property to fail (e.g., a counter example) may be used to identify/locate the error in the hardware design. Once the hardware design has been modified the modified hardware design may be re-verified (e.g., blocks 202-214 may be repeated for the modified hardware design).

Although in the example method 200 of FIG. 2 the verifications are performed in a particular order one at time, in other examples the verifications may be performed in any order, and/or two or more of the verifications may be performed in parallel or simultaneously.

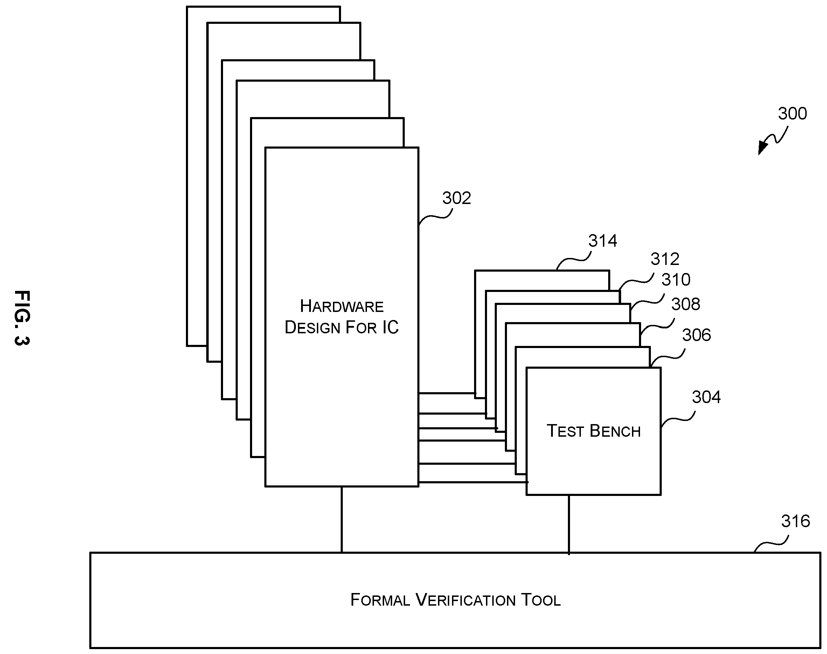

Reference is now made to FIG. 3 which shows a block diagram of an example system 300 for verifying a property of a hardware design for an integrated circuit to implement a floating point product of power functions using the method 200 of FIG. 2. The system 300 may be implemented by one or more computing-based devices, such as the computing-based device 400 described below with respect to FIG. 4. For example, one or more of the components of the system 300 of FIG. 3 may be implemented as computer readable instructions, which when executed by a computing-based device, cause the computing-based device to perform the functions of the component described below.

The system 300 comprises one or more copies of a hardware design 302 for an integrated circuit to implement a floating point product of power functions; a test bench 304, 306, 308, 310, 312, 314 for each verification in the method 200 of FIG. 2; and a formal verification tool 316.

Each test bench 304, 306, 308, 310, 312, 314 comprises a set of one or more assertions, and a set of one or more constraints, wherein if the one or more assertions are verified to be true under the one or more constraints, a specific feature of the hardware design has been verified. One or more of the test benches may also comprises modelling logic. For example, there may be a first test bench 304 that comprises one or more assertions, which if verified to be true verifies that, for pairs of input sets in an input domain that satisfy equations (7) and (8), an instantiation of the hardware design generates outputs which satisfy equations (9) and (10); there may be a second test bench 306 that comprises one or more assertions, which if verified to be true, verifies that the property (e.g. correctness) is true for an instantiation of the hardware design for a subset of input sets in the input domain; there may be a third test bench 308 that comprises one or more assertions, which if verified to be true, verifies that an instantiation of the hardware design will generate outputs with the correct sign; there may be fourth test bench 310 that comprises one or more assertions, which if verified to be true, verifies that an instantiation of the hardware design generates expected outputs in response to exception input sets; there may be a fifth test bench 312 that comprises one or more assertions, which if verified to be true, verifies that an instantiation of the hardware design generates exception outputs in response to certain non-exception input sets; and there may be a sixth test bench 314 that comprises one or more assertions, which if verified to be true, verifies that an instantiation of the hardware design will not generate any unexpected exception outputs.

Each test bench 304, 306, 308, 310, 312, 314 is linked to a copy of the hardware design so that the one or more assertions of each test bench are connected to the relevant signals of the hardware design so as to be able to evaluate the asserted property/properties. As described above, a test bench 304, 306, 308, 310, 312, 314 may be linked to a hardware design by binding the test bench 304, 306, 308, 310, 312, 314 to the hardware design or incorporating the test bench into the hardware design.

As described above, the formal verification tool 316 is a software tool that is capable of performing formal verification of a hardware design.

The hardware design(s) 302, the test benches (each comprising a set of one or more assertions) 304, 306, 308, 310, 312, 314 and the bindings (if any) are loaded in the formal verification tool 316. The formal verification tool 316 is then configured to formally verify each set of one or more assertions for the hardware design.

When the formal verification tool 316 is used to verify an assertion, the formal verification tool 316 may output an indication of whether or not the assertion is valid (i.e., the asserted property is true for all valid states or sequence of states), which may also be referred to herein as the assertion being successfully verified. The output may be yes, the assertion is valid or has been successfully verified; no, the assertion is not valid (i.e., it is not true or has failed for at least one valid state or sequence of states) or has not been successfully verified; or the formal verification was inconclusive. The formal verification may be inconclusive, for example, because the computing-based device running the formal verification tool 316 has run out of memory or because the formal verification tool 316 has determined that a certain amount of progress has not been made after a predefined period of time.

Where an assertion is not valid or has not been successfully verified, the formal verification tool 316 may also output information indicating a state or sequence of states of the hardware design which causes the assertion to fail. For example, the formal verification tool 316 may output a trace of the verification indicating at what point, state or sequence of states the failure occurred. In other words, the formal verification tool 316 may output a counter example.

Where one or more of the verifications is performed by comparing the output of an instantiation of the hardware design with a high level model of the hardware design, the system 300 may also include a high level model of the hardware design (not shown).

Where one or more of the verifications is performed via another verification method the system 300 may additionally comprise one or more other verification tools. For example, where one or more of the verifications is performed via simulation-based verification the system may comprise a simulation engine.

As is known to those of skill in the art, a simulation engine is a software tool capable of performing simulation-based verification of a hardware design. In particular, a simulation engine monitors the output of one or more instantiations of the hardware design in response to each input vector in a test set and compares the outputs to known expected outputs to determine if the instantiation is behaving as expected.

A simulation engine may perform the simulation-based verification using any known method. For example, the simulation engine may receive the hardware design in, for example HDL, convert the HDL to another language, such as C, and perform the simulation on the C code; the simulation engine may receive the hardware design as, for example, HDL and perform the simulation directly on the HDL; or the simulation engine may implement the hardware design in hardware and perform the simulation on the hardware. Once the simulation is complete the simulation engine may output an indication of whether or not the hardware design passed the simulation.

Once the verifications are complete the hardware design 302 may be modified based on the outcome of the verification (e.g., the information output by the formal verification tool 316). For example, if the verification identifies that an instantiation of the hardware design 302 will not operate as expected then the hardware design 302 may be modified to correct its operation. The modified hardware design may then be re-verified. Once the design or the modified design has been verified to be operating as expected the verified design (the hardware design or the modified hardware design) may be encoded or stored on a computer readable medium, which when processed at an integrated circuit manufacturing system, such as the integrated circuit manufacturing system described with respect to FIG. 6, configures the integrated circuit manufacturing system to manufacture the integrated circuit described by the hardware design. Subsequently the computer readable medium may be processed at an integrated circuit manufacturing system, as described with reference to FIG. 6, to generate an integrated circuit.

Exemplary details for implementing the method 200 of FIG. 2 will now be described.

**FIRST VERIFICATION PHASE**

As described above in reference to block 202 of FIG. 2, verifying a property (e.g. correctness) of hardware design for an integrated circuit to implement a floating point product of power functions may comprise formally verifying that, for non-exception input sets in an input space that satisfy equations (7) and (8), an instantiation of the hardware design generates outputs that satisfy equations (9) and (10). Formally verifying this may comprise generating a test bench which comprises one or more assertions that specify that when the requirements set out equations (7) and (8) are true then the requirements set out in equations (9) and (10) are true.

The following is pseudocode for an example assertion to verify that a hardware design for an integrated circuit to implement a floating point division function ($x_0{}^1 \times x_1{}^{-1}$) with single floating point precision (e.g. F32) inputs and outputs satisfies the requirements set out in equations (9) and (10) when the requirements set out in equations (7) and (8) are satisfied for positive inputs. In the example assertion, X0 and X1 represent the inputs to a first copy of the hardware design; Y0 and Y1 represent the inputs to a second copy of the hardware design; A represents the output of the first copy of the hardware design; B represents the output of the second copy of the hardware design; and X0[i], X1[i], Y0[i], Y1[i], A[i] and B[i] denote the ith bit of the inputs and outputs respectively.

```
integer k;

mantissa_and_exponent_scaling_assertion:  assert property (

//sign = 0

((X0[31] == 0) && (X1[31] == 0) && (Y0[31] == 0) && (Y1[31] == 0)) &&

//same input mantissa (i.e. equation (7))

((X0[22:0] == Y0[22:0]) && (X1[22:0] == Y1[22:0]) &&

//input exponent relationship (i.e. equation (8))

 (lcm(X0[30:23] - X1[30:23] - Y0[30:23] + Y1[30:23]) == lcm (k)) &&

//noinfs or NaNs

((X0[30:23] != 8'hFF) && (X1[30:23] != 8'hFF) && (Y0[30:23] != 8'hFF)
&& (Y1[30:23] != 8'hFF))) &&

//no zeroes & denorms

((X0[30:23] != 8'h00 ) && (X1[30:23] != 8'h00 ) && (Y0[30:23] !=
8'h00 ) && (Y1[30:23] != 8'h00 )   )

 //output requirements

 // same output mantissa (i.e., equation (9))

 |-> ((A[22:0] == B[22:0] )

 // output exponent relationship (i.e., equation (10))

  && (A[30:23] - X0[30:23] + X1[30:23] ) == (B[30:23] - Y0[30:23] +
Y1[30:23] )
```

**This** assertion ("mantissa_and_exponent_scaling_assertion") states that when all the inputs to the two copies of the hardware design are positive ((X0:[31] == 0) && (X1[31] == 0) && (Y0[31] == 0) && (Y1[31] == 0), the corresponding inputs have the same mantissa ((X0[22:0] == Y0[22:0]) && (X1[22:0] == Y1[22:0])), and the exponents are related as set forth in equation (8) (1cm(X0[30:23] - X1[30:23] - Y0[30:23] + Y1[30:23]) == 1cm (k)), where lcm is the lowest common multiple of the denominators of the $t_i's$ in their simplest form, and k is an integer bit vector that can be any value) then in the same cycle (|->) the outputs of the two copies of the hardware design will have the same output mantissa (A[22:0] == B[22:0]) and their output exponents are related as set out in equation (10) (A[30:23] - X0[30:23] + X1[30:23] ) == (B[30:23] - Y0[30:23] + Y1[30:23] ). The assertion also excludes all of the exception inputs (i.e., infinity or NaN (i.e. the exponent (X0/X1/Y0/Y1[30:23] is equal to all ones (8'hFF)); and a zero or denormal (i.e. the exponent (x0/x1/Y0/Y1 [30:23]) is equal to zero (8 ' h00))). It is noted that in this particular example the exponent relationship term may be removed (1cm(x0 [30: 23] - X1[30:23] - Y0[30:23] + Y1[30:23]) == 1cm (k)). This is because in this example (i.e., where the product of power functions is a division function) the weighted sum of any exponent set will be an integer, thus the difference between weighted sums of any two exponent sets will be an integer.

It is noted that in this example $t_0$ is equal to 1 and $t_1$ is equal to -1. The input exponent relationship expression in the above assertion may be written more generally as lcm (T0*X0[30:23] + T1*X1[30:23] - T0*Y0[30:23] - T1*Y1[30:23]) = lcm ( k). This formulation is designed to avoid rounding errors when the $t_i$'s are not integers. Specifically, where lcm and k are as described above, the denominators of the $t_i$'s cancel with factors of lcm. This cancellation may be done by hand to avoid giving the formal tool any fractions to calculate, since the fractions may result in rounding errors.

It will be evident to a person of skill in the art that this is an example assertion only and other suitable assertions may be developed in other assertion-based languages. For example, other assertions may specify a different time relationship between inputs and outputs to account for any delay between when an input is received to when the corresponding output value is produced. Furthermore, although the example assertion compares the output of two copies of the hardware design, in other examples an assertion may compare the output of different cycles of the same hardware design.

## SECOND VERIFICATION PHASE

As described above in reference to block 204 of FIG. 2, verifying a property (e.g. correctness) of a hardware design for an integrated circuit to implement a floating point product of power functions ($x_0^{t_0} \times ... \times x_n^{t_n}$) may comprise verifying for a subset of the non-exception input sets that the property (e.g. correctness) is true. The subset of the non-exception input sets that are verified are based on the groups of exponent sets which satisfy the requirements set forth in equation (8). The subset of input sets comprises input sets with a subset of exponent sets. The subset of exponent sets may comprise at least one exponent set from each group of exponent sets that satisfy equation (8) and any exponent sets which do not satisfy equation (8) with respect to at least on other exponent set. The property (e.g., correctness) may be verified for the subset of input sets via formal verification.

As described above, where the floating point product of power functions is a division function (i.e., $x_0^1 \times x_1^{-1}$) any pair of exponent sets will satisfy equation (8). Thus, for a division function there is only one group of exponent sets to which all exponent sets are part of. This means that it is sufficient in the second verification phase to verify the property for only one exponent set. The inventors have identified that verifying the property for an exponent set in which each exponent is equal to the *bias* works particularly well (i.e., $x_{0.exp}$, $x_{1.exp}$ = *bias*).

The following is pseudocode for an example assertion to verify that a hardware design for an integrated circuit to implement a floating point division function ($x_0^1 \times x_1^{-1}$) with single floating point precision (e.g. F32) inputs and outputs, generates the correct output in response to each input set in the subset of input sets wherein $x_{0.exp}$, $x_{1.exp}$ = *bias.* In the example assertion, X0 and X1 represent the inputs to an instantiation of the hardware design; A represents the output of the instantiation of the hardware design; Y0 and Y1 represent the inputs to a high level model of the hardware design; B represents the output of the high level model of the hardware design; and X0[i], X1[i], Y0[i], Y1[i], A[i] and B[i] denote the ith bit of the inputs and outputs respectively.

```
correctness_assertion: assert property (
//sign = 0
((X0[31] == 0) && (X1[31] == 0) && (Y0[31] == 0) && (Y1[31] == 0)) &&
//same input mantissa
((X0[22:0] == Y0[22:0]) && (X1[22:0] == Y1[22:0]) &&
//input exponents are equal to the bias
((X0[30:23]==bias) && (X1[30:23]==bias) && (Y0[30:23]==bias) &&
(Y1[30:23] == bias))
|-> ((A[30:0] == B[30:0] )
```

This assertion ("correctness_assertion") states that when the inputs to the hardware design and the high-level model are positive ((X0[31] == 0) && (X1[31] == 0) && (Y0[31] == 0) && (Y1[31] == 0)), and the corresponding inputs have the same mantissa ((X0[22:0] == Y0[22:0]) && (X1[22:0] == [22:0])), and the exponents are equal to the bias (X0[30:23] ==bias) && (X1[30:23]==bias) && (Y0[30:23]==bias) && (Y1[30:23] == bias) then in the same cycle (| ->) the outputs are the same ((A[30:0] == B[30:0]).

It will be evident to a person of skill in the art that this is an example assertion only and other suitable assertions may be developed in other assertion-based languages. For example, other assertions may specify a different time relationship between inputs and outputs to account for any delay between when an input is received to when the corresponding output value is produced. Furthermore, although the example assertion compares the output of an instantiation of the hardware design in response to certain input sets to the output of a high level model of the hardware design, in other examples, one or more of the assertions may compare the output of an instantiation of the hardware designs in response to certain input sets to a predetermined output.

## FORMAL VERIFICATION OF EXCEPTION INPUTS

As described above in reference to block 208 of FIG. 2, verifying a property (e.g. correctness) of a hardware design for an integrated circuit to implement a floating point product of power functions ($x_0^{t0} \times ... \times x_n^{tn}$) may comprise verifying that the hardware design handles exception input sets as expected (e.g. exception input sets produce certain exception outputs as specified in the specification for the hardware design). Different hardware designs may support different exception input sets and/or different exception outputs. For example, the specification for a hardware design for an integrated circuit to implement a floating point division function ($x_0^1 \times x_1^{-1}$) may specify that when the exception input sets shown in Table 2 are received the exception outputs set out in Table 2 are to be generated.

Table 2

| Rule | Input Set | Output |
|---|---|---|
| 1 | $x_0$ = NaN or $x_1$ = NaN | NaN (special) |
| 2 | $x_0 = \pm0$ and $x_1 \neq \pm0$ | $\pm0$ |
| 3 | $x_0 = \pm0$ and $x_1 = \pm0$ | NaN (special) |
| 4 | $x_0 = \pm0$ and $x_1 = \pm0$ | $\pm\infty$ |
| 5 | $x_0 = \pm\infty$ and $x_1 \neq \pm\infty$ | $\pm\infty$ |
| 6 | $x_0 = \pm\infty$ and $x_1 = \pm\infty$ | NaN (special) |
| 7 | $x_0 \neq \pm\infty$ and $x_1 = \pm\infty$ | $\pm0$ |

The hardware design may be formally verified to ensure that it handles exception input sets as expected using one assertion for each exception input set. Each assertion may state that when the input set has a certain format then the output has a certain format.

The following is pseudocode for a set of three example assertions to verify rules 1, 3 and 6 of Table 2 for a hardware design for an integrated circuit to implement a division function ($x_0^1 \times x_1^{-1}$) with single floating point precision (e.g., F32) inputs and outputs. In the example assertions, X0 represents the first input to an instantiation of the hardware design; x1 represents the second input to the instantiation of the hardware design; Y represents the output of the instantiation of the hardware design; and X0[i], X1[i] and Y[i] denote the i$^{th}$ bit of the inputs and output respectively.

```
nan_assertion_rule_1: assert property (
     ((X0[30:23] == 8'hFF) && (X0[22:0] != 0)) ‖ ((X1[30:23] ==
     8'hFF) && (X1[22:0] != 0)))|-> (Y == 32'h7FC00000));
zero_assertion_rule_3: assert property (
     ((X0[30:23] == 8'h00) && (X1[30:23] == 8'h00))|-> (Y ==
     32'h7FC00000));
infinity_assertion_rule_6: assert property (
     ((X0[30:23] == 8'hFF) && (X0[22:0] == 0)) && ((X1[30:23] ==
     8'hFF) && (X1[22:0] == 0))|-> (Y == 32'h7FC00000));
```

The first assertion ("nan_assertion_rule_1") states that when either input is a NaN (i.e. when the exponent (x0/x1 [30:23]) is all ones (8' hFF = 8 bits have a hexadecimal value of FF) and the mantissa (X0/X1[22:0]) is not equal to zero) then in the same cycle (|->) the output (Y) is equal to NaN (special) (i.e. has a hexadecimal value of 7FC00000).

The second assertion ("zero_assertion_rule_3") states that when both inputs are zero (i.e., when the exponent (X0/X1 [30:21]) is all zeros (8' h00)) then in the same cycle (|->) the output (Y) is equal to NaN (special) (i.e. has a hexadecimal value of 7FC00000).

The third assertion ("infinity_assertion_rule_6") states that when both inputs are positive or negative infinity (i.e. when the exponent (X0/X1[30:21]) is all one's (8' hFF) and the mantissa (X0/X1[22:0]) is equal to zero) then in the same cycle (|->) the output (Y) is equal to NaN (special) (i.e. has a hexadecimal value of 7FC00000).

It will be evident to a person of skill in the art that these are example assertions only and other suitable assertions may be developed in other assertion-based languages and/or may establish different relationships between exception input sets and exception outputs based on the specification for the hardware design being verified. For example, other assertions may specify a different time relationship between inputs and outputs to account for any delay between when an input is received to when the corresponding output value is produced. Further, although the example assertions compare the output of an instantiation of the hardware design in response to certain input sets to a predetermined value, in other examples, one or more of the assertions may compare the output of an instantiation of the hardware design in response to certain input sets to the output of a high-level model of the hardware design.

## FORMAL VERIFICATION OF NON-EXCEPTION INPUTS THAT PRODUCE EXCEPTION OUTPUTS

As described above in reference to block 210 of FIG. 2, verifying a property (e.g. correctness) of a hardware design for an integrated circuit to implement a floating point product of power functions ($x_0^{t_0} \times ... \times x_n^{t_n}$) may comprise verifying that the hardware design produces exception outputs for certain non-exception inputs.

Example inputs which may produce exception outputs may include, but are not limited to:

- Input combinations which cause the output to fall outside of the representable range of the output format

  ○ E.g. MAX_FLOAT/MIN_FLOAT will be larger than the maximum representable number so will usually be either MAX_FLOAT or INF;

- Input combinations which cause outputs in the denormal range which may be flushed to zero; and
- If some $t_i$ has a denominator which is a multiple of two, then a negative value of $x_i$ may results in a NaN output.

The following is pseudocode for an example assertion to verify that a hardware design for an integrated circuit to implement a division function ($x_0^1 \times x_1^{-1}$) with single floating point precision (e.g. F32) inputs and output, generates a zero when $x_0$ is "small" and $x_1$ is "large". In the example assertion, X0 represents the first input to an instantiation of the hardware design; X1 represents the second input to the instantiation of the hardware design; Y represents the output of the instantiation of the hardware design; and X0[i], X1[i] and Y[i] denote the ith bit of the inputs and output respectively.

```
small_input0_large_input1_assertion: assert property (
    (X0[30:23] == 8'h01) && (X1[30:23] == 8'hFE))
    |-> (&& (Y[30:0] == 0 )));
```

This assertion ("small_input0_large_input1_assertion") states that when the first input (X0) is a small input (i.e. when the exponent (X0[30:23]) has a hexadecimal value of 1 (8'h01 = 8 bits have a hexadecimal value of 01) and the second input is a large input (i.e. when the exponent (x1[30: 23]) has a hexadecimal value of FE (8' hFE = 8 bits have a hexadecimal value of FE)) then in the same cycle (|->) the output (Y) is equal to zero. A similar assertion may be generated to verify that if $x_0$ is "large" and $x_1$ is "small" the instantiation of the hardware design generates or outputs an infinity.

It will be evident to a person of skill in the art that this is an example assertion only and other suitable assertions may be developed in other assertion-based languages and/or may establish different relationships between non-exception inputs and exception outputs based on the specification for the hardware design. For example, other assertions may specify a different time relationship between inputs and outputs to account for any delay between when an input is received to when the corresponding output value is produced. Further, although the example assertion compares the output of an instantiation of the hardware design in response to certain input sets to a predetermined value, in other examples, the assertion may compare the output of an instantiation of the hardware design in response to certain input sets to the output of a high-level model of the hardware design.

## FORMAL VERIFICATION OF NO UNEXPECTED EXCEPTION OUTPUTS

As described above in reference to block 212 of FIG. 2, verifying a property (e.g. correctness) of a hardware design for an integrated circuit to implement a floating point product of power functions ($x_0^{t_0} \times ... \times x_n^{t_n}$) may comprise verifying that the hardware design does not produce any unexpected exception outputs. In other words, it may be verified that an instantiation of the hardware design does not produce an exception output in response to any other inputs than those verified in blocks 208 and 210 (i.e., in response to exception inputs; and in response to special non-exception inputs identified as producing exception outputs).

The hardware design may be formally verified to ensure that it does not produce any unexpected exception outputs using one or more assertions. For example, a suitable assertion may state that for all inputs other than those verified in blocks 208 and 210 the output is not an exception (e.g., the output exponent is not equal to zero or all ones).

The following is pseudocode for an example assertion to verify that an instantiation of the hardware design for an integrated circuit to implement a division function ($x_0^1 \times x_1^{-1}$) with single floating point precision (e.g., F32) inputs and output does not generate an unexpected exception output. In the example assertion, X0 represents the first input to the instantiation of hardware design; X1 represents the second input to the instantiation of the hardware design; Y represents the output of the instantiation of the hardware design; and X0[i], X1[i] and Y[i] denote the ith bit of the inputs and output respectively.

```
no_exception_output_assertion: assert property
   (( X0[30:23] != 8'hFF ) && ( X1[30:23] != 8'hFF )
   && (X0[30:23] != 8'h00) && ( X1[30:23] != 8'h00)
   && ((X0[30:23]-X1[30:23]+bias < 8'hFF) && (X0[30:23]-
X1[30:23]+bias >0))
            |-> ((Y[30:23] != 0)
                && (Y[30:23] != 8'hFF)));
```

This assertion ("no_exception_output_assertion") states that when (i) the inputs are not an infinity or NaN (i.e. the exponent (X0/X1[30: 23]) is equal to all ones); (ii) the inputs are not a zero or denormal (i.e. the exponent (X0/X1[30:23] is equal to zero (8'h00)); and (iii) the results lie in the representable range ((X0[30:23]-X1[30:23]+bias < 8'hFF) && (X0[30:23]-X1[30:23]+bias >0)); then in the same cycle (|->) the output (Y) is not an exception (i.e. the exponent Y[30:23] is not equal to zero or all ones (8'hFF)).

It will be evident to a person of skill in the art that this is an example assertion only and other suitable assertions may be developed in other assertion-based languages and/or may establish a different definition of non-exception inputs and exception outputs based on the specification of the hardware design being verified. For example, other assertions may specify a different time relationship between inputs and outputs to account for any delay between when an input is received to when the corresponding output value is produced.

## MATHEMATICAL PROOF

The following is a mathematical proof that if equations (7) and (8) are true for a pair of input sets to a floating point product of power functions ($x_0{}^{t_0} \times x_1{}^{t_1} \times ... \times x_n{}^{t_n}$) then equations (9) and (10) will be true for the corresponding outputs.

Let there be two collections of floating point numbers $x_0, x_1, ... , x_n$ and $y_0, y_1, ... , y_n$ where for all $i \in \{0,1, ... , n\}$ $mant_{x_i} = mant_{y_i}$ and $(t_0 exp_{x_0} + t_1 exp_{x_1} + ... + t_n exp_{x_n})\backslash - (t_0 exp_{y_0} + t_1 exp_{y_1} + ... + t_n exp_{y_n})$ is an integer. Let $out_x = x_0{}^{t_0} \times x_1{}^{t_1} \times ... \times x_n{}^{t_n}$ and $out_y = y_0{}^{t_0} \times y_1{}^{t_1} \times ... \times y_n{}^{t_n}$.

Let $x_i = (-1)^{s_{x_i}} \times 2^{e_{x_i}-b} \times 1.m_{x_i}$ for all i. Then $out_x = x_0{}^{t_0} \times x_1{}^{t_1} \times ... \times x_n{}^{t_n} = \prod_i((-1)^{s_{x_i}} \times 2^{e_{x_i}-b} \times 1.m_{x_i})^{t_i}$ and $out_x = y_0{}^{t_0} \times y_1{}^{t_1} \times ... \times y_n{}^{t_n} = \prod_i((-1)^{s_{y_i}} \times 2^{e_{y_i}-b} \times 1.m_{x_i})^{t_i}$

As discussed earlier, the sign of the output is completely determined by the sign of the inputs. Hence:

$$out_x = (-1)^{s_{out_x}} \prod_i(2^{t_i e_{x_i}} 2^{-t_i b} \times (1.m_{x_i})^{t_i}) \qquad (18)$$

$$out_y = (-1)^{s_{out_y}} \prod_i(2^{t_i e_{y_i}} 2^{-t_i b} \times (1.m_{x_i})^{t_i}) \qquad (19)$$

Since for all $i \in \{0,1, ... , n\}$ $mant_{x_i} = mant_{y_i}$ we may let $k = \prod_i(2^{-t_i b} \times (1.m_{x_i})^{t_i}) = \prod_i(2^{-t_i b} \times (1.m_{y_i})^{t_i})$ hence :

$$\frac{out_x}{(-1)^{s_{out_x}} \prod_i(2^{t_i e_{x_i}})} = k = \frac{out_y}{(-1)^{s_{out_y}} \prod_i(2^{t_i e_{y_i}})} \quad (20)$$

Rearranging equation (20) we have equation (21).

$$2^{e_{out_x}} \times 1.m_{out_x} = 2^{e_{out_y}} \times 1.m_{out_y} \times 2^{(t_0 exp_{x_0} + t_1 exp_{x_1} + ... + t_n exp_{x_n}) - (t_0 exp_{y_0} + t_1 exp_{y_1} + ... + t_n exp_{y_n})}$$

$$(21)$$

Expanding the products and writing the outputs in terms of their mantissas, signs and exponents we have equation (22).

$$2^{e_{out_x}} \times 1.m_{out_x} \times 2^{-(t_0 exp_{x_0} + t_1 exp_{x_1} + ... + t_n exp_{x_n})} = 2^{e_{out_y}} \times 1.m_{out_y} \times$$

$$2^{-(t_0 exp_{y_0} + t_1 exp_{y_1} + ... + t_n exp_{y_n})} \quad (22)$$

If $mant_{out_x} = mant_{out_y}$, taking the logarithm base 2 gives us the second part of the result (i.e., equation (10)).

To see that $mant_{out_x} = mant_{out_y}$ (i.e., equation (9)) we rearrange again to give equation (23).

$$2^{e_{out_x}} \times \frac{1.m_{out_x}}{1.m_{out_y}} = 2^{e_{out_y}} \times 2^{(t_0 exp_{x_0} + t_1 exp_{x_1} + ... + t_n exp_{x_n}) - (t_0 exp_{y_0} + t_1 exp_{y_1} + ... + t_n exp_{y_n})}$$

$$(23)$$

Since $(t_0 exp_{x_0} + t_1 exp_{x_1} + ... + t_n exp_{x_n}) - (t_0 exp_{y_0} + t_1 exp_{y_1} + ... + t_n exp_{y_n})$ is an integer we must have that $\frac{1.m_{out_x}}{1.m_{out_y}}$ is a power of two; and as $\frac{1}{2} < \frac{1.m_{out_x}}{1.m_{out_y}} < 2$ we must have that $\frac{1.m_{out_x}}{1.m_{out_y}} = 1$ hence $mant_{out_x} = mant_{out_y}$.

FIG. 4 illustrates various components of an exemplary computing-based device 400 which may be implemented as any form of a computing and/or electronic device, and in which embodiments of the methods and systems described herein may be implemented.

Computing-based device 400 comprises one or more processors 402 which may be microprocessors, controllers or any other suitable type of processors for processing computer executable instructions 405 to control the operation of the device in order to verify a property of a hardware design for an integrated circuit to implement a floating point product of power functions. In some examples, for example where a system on a chip architecture is used, the processors 402 may include one or more fixed function blocks (also referred to as accelerators) which implement a part of the method of verifying a property of a hardware design for an integrated circuit to implement a floating point product of power functions, in hardware (rather than software or firmware). Platform software comprising an operating system 404 or any other suitable platform software may be provided at the computing-based device to enable application software, such as a simulation engine or formal verification tool, to be executed on the device.

The computer executable instructions may be provided using any computer-readable media that is accessible by computing-based device 400. Computer-readable media may include, for example, computer storage media such as memory 406 and communications media. Computer storage media (i.e., non-transitory machine readable media), such as memory 406, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (i.e., non-transitory machine readable media, e.g., memory 406) is shown within the computing-based device 400 it will be appreciated that the storage may be distributed or located remotely and accessed via a network or other communication link (e.g., using communication interface 408).

The computing-based device 400 also comprises an input/output controller 410 arranged to output display information to a display device 412 which may be separate from or integral to the computing-based device 400. The display information may provide a graphical user interface. The input/output controller 410 is also arranged to receive and process input from one or more devices, such as a user input device 414 (e.g., a mouse or a keyboard). This user input may be used to initiate verification. In an embodiment the display device 412 may also act as the user input device 414 if it is a touch sensitive display device. The input/output controller 410 may also output data to devices other than the display device, e.g., a locally connected printing device (not shown in FIG. 4).

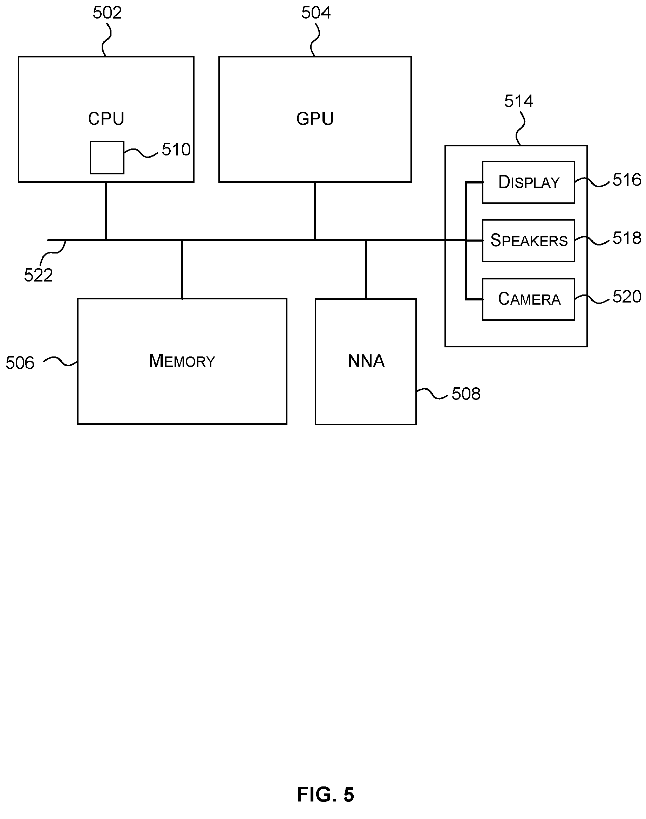

FIG. 5 shows a computer system in which an integrated circuit to implement a floating point product of power functions may be implemented. The computer system comprises a CPU 502, a GPU 504, a memory 506, a neural network accelerator (NNA) 508 and other devices 514, such as a display 516, speakers 518 and a camera 520. The CPU 502 comprises an integrated circuit 510 to implement a floating point product of power functions. In other examples, one or more of the depicted components may be omitted from the system, and/or the integrated circuit 510 may be implemented on the GPU 504 or within the NNA 508. The components of the computer system can communicate with each other via a communications bus 522.

Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e., run) in an integrated circuit manufacturing system configures the system to manufacture an integrated circuit to implement a floating point product of power functions. An integrated circuit definition dataset may be, for example, an integrated circuit description or a hardware design for an integrated circuit.

Therefore, there may be provided a method of manufacturing, at an integrated circuit manufacturing system, an integrated circuit to implement a product of power functions as described herein. Furthermore, there may be provided an integrated circuit definition dataset that, when processed in an integrated circuit manufacturing system, causes the method of manufacturing an integrated circuit to implement a product of power functions to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset (e.g., a hardware design for an integrated circuit) at an integrated circuit manufacturing system so as to configure the system to manufacture an integrated circuit to implement a floating point product of power functions will now be described with respect to FIG. 6.

FIG. 6 shows an example of an integrated circuit (IC) manufacturing system 602 which is configured to manufacture an integrated circuit to implement a floating point product of power functions as described in any of the examples herein. In particular, the IC manufacturing system 602 comprises a layout processing system 604 and an integrated circuit generation system 606. The IC manufacturing system 602 is configured to receive an IC definition dataset (e.g.,

defining an integrated circuit to implement a floating point product of power functions as described in any of the examples herein), process the IC definition dataset, and generate the IC according to the IC definition dataset. The processing of the IC definition dataset configures the IC manufacturing system 602 to manufacture the integrated circuit to implement a floating point product of power functions.

The layout processing system 604 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g., in terms of logical components (e.g., NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 604 has determined the circuit layout it may output a circuit layout definition to the IC generation system 606. A circuit layout definition may be, for example, a circuit layout description.

The IC generation system 606 generates an IC according to the circuit layout definition, as is known in the art. For example, the IC generation system 606 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 606 may be in the form of computer-readable code which the IC generation system 606 can use to form a suitable mask for use in generating an IC.

The different processes performed by the IC manufacturing system 602 may be implemented all in one location, e.g., by one party. Alternatively, the IC manufacturing system 602 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture an integrated circuit to implement a floating point product of power functions without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g., by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to FIG. 6 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in FIG. 6, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g., in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description, it will be evident to a person skilled in the art that various modifications may be made within the scope of the invention.

**Claims**

1. A computer-implemented method (200) of verifying a property of a hardware design for an integrated circuit to implement a product of power functions of the form $x_0^{t_0} \times ... \times x_n^{t_n}$, wherein $t_0 \cdots t_n$ are fixed, rational numbers, $x_0 \cdots x_n$ are floating point inputs, and n is an integer greater than, or equal to, one, the method (200) comprising, in one or more processors:

    performing a first verification phase which comprises formally verifying that, for any first non-exception input set $X = X_0, ... , X_n$ and any second non-exception input set $Y = Y_0, ... , Y_n$ in an input space wherein corresponding inputs have a same mantissa and $(t_0 X_{0.exp} + \cdots + t_n X_{n.exp}) - (t_0 Y_{0.exp} + \cdots + t_n Y_{n.exp})$ is an integer, an instantiation of the hardware design generates outputs $X'$ and $Y'$ with a same mantissa and $X'_{exp} - (t_0 X_{0.exp} + \cdots + t_n X_{n.exp}) = Y'_{exp} - (t_0 Y_{0.exp} + \cdots + t_n Y_{n.exp})$ (202); and
    performing a second verification phase which comprises verifying the property for the hardware design for a subset of input sets in the input space, the subset of input sets selected based on exponent sets wherein $(t_0 X_{0.exp} + \cdots + t_n X_{n.exp}) - (t_0 Y_{0.exp} + \cdots + t_n Y_{n.exp})$ is an integer (204);
    wherein *exp* denotes an exponent of an input or an output.

2. The method (200) of claim 1, wherein:

    the exponent sets for the input space are divisible into one or more groups of exponent sets wherein $(t_0 X_{0.exp} + \cdots + t_n X_{n.exp}) - (t_0 Y_{0.exp} + \cdots + t_n Y_{n.exp})$ is an integer,
    the subset of input sets comprises input sets with a subset of exponent sets, and
    the subset of exponent sets comprises one exponent set from each of the one or more groups of exponent sets.

3. The method (200) of claim 2, wherein the product of power functions is of the form $(x_0^1 \times x_1^{-1})$ and the subset of exponent sets comprises a single exponent set.

4. The method (200) of claim 3, wherein the single exponent set comprises exponents that are equal to a bias of the floating point input format.

5. The method (200) of claim 1, wherein:

    the exponent sets for the input space are divisible into one or more groups of exponent sets wherein $X_{i.exp} - Y_{i.exp}$ is an integer multiple of $1/t_i$ for all $i \in \{0,1, ... , n\}$,
    the subset of input sets comprises input sets with a subset of exponent sets, and
    the subset of exponent sets comprising one exponent set from each of the one or more groups of exponent sets.

6. The method (200) of any preceding claim, wherein the integrated circuit implements a symmetric rounding mode, the input space comprises all non-exception input sets, and performing the first verification phase comprises:

    formally verifying that, for any pair of input sets in the input space in which the corresponding inputs have the same absolute value, an instantiation of the hardware design generates outputs that match in all bits except the sign bit; and
    formally verifying that, for any first non-exception positive input set $X = X_0, ... , X_n$ and any second non-exception positive input set $Y = Y_0, ... , Y_n$ in the input space wherein corresponding inputs have a same mantissa and $(t_0 X_{0.exp} + \cdots + t_n X_{n.exp}) - (t_0 Y_{0.exp} + \cdots + t_n Y_{n.exp})$ is an integer, an instantiation of the hardware design generates outputs $X'$ and $Y'$ with a same mantissa and $X'_{exp} - (t_0 X_{0.exp} + \cdots + t_n X_{n.exp}) = Y'_{exp} - (t_0 Y_{0.exp} + \cdots + t_n Y_{n.exp})$.

7. The method (200) of any of claims 1 to 5, wherein the integrated circuit implements an asymmetric rounding mode, the input space comprises input sets that generate positive outputs, and the method further comprises:

    formally verifying that, for any first non-exception input set $X = X_0, ... , X_n$ and any second non-exception input set $Y = Y_0, ... , Y_n$ in a second input space wherein corresponding inputs have a same mantissa and $(t_0 X_{0.exp} + \cdots + t_n X_{n.exp}) - (t_0 Y_{0.exp} + \cdots + t_n Y_{n.exp})$ is an integer, an instantiation of the hardware design generates outputs

$X'$ and $Y'$ with a same mantissa and $X'_{exp} - (t_0 X_{0.exp} + \cdots + t_n X_{n.exp}) = Y'_{exp} - (t_0 Y_{0.exp} + \cdots + t_n Y_{n.exp})$;
wherein the second input space comprises input sets that generate negative outputs.

8. The method (200) of any preceding claim, further comprising verifying that an instantiation of the hardware design generates an output with a correct sign in response to any input set (206).

9. The method (200) of any preceding claim, further comprising verifying that an instantiation of the hardware design generates expected outputs in response to exception input sets (208) and/or verifying that an instantiation of the hardware design produces exception outputs in response to certain non-exception input sets (210).

10. The method (200) of any preceding claim, wherein the property of the hardware design is one of: a unit of last precision error requirement, a relative error requirement, a particular rounding mode, monotonicity, and that the hardware design is equivalent to another hardware design to implement the product of power functions.

11. The method (200) of any preceding claim, further comprising, in response to the verifications being successful, generating, at an integrated circuit manufacturing system, the integrated circuit to implement the product of power functions based on the hardware design.

12. The method (200) of any preceding claim, further comprising, in response to at least one of the verifications not being successful, modifying the hardware design.

13. The method (200) of any preceding claim, further comprising, in response to the verifications being successful, encoding on a computer readable storage medium the verified hardware design which, when processed in an integrated circuit manufacturing system, configures the integrated circuit manufacturing system to manufacture the integrated circuit to implement the product of power functions.

14. A system (300) for verifying a property of a hardware design for an integrated circuit to implement a product of power functions of the form $x_0^{t_0} \times \ldots \times x_n^{t_n}$, wherein $t_0 \cdots t_n$ are fixed, rational numbers, $x_0 \cdots x_n$ are floating point inputs, and n is an integer greater than, or equal to, one, the system (300) comprising:

   one or more verification tools comprising a formal verification tool, the one or more verification tools configured to:

   perform a first verification phase which comprises formally verifying that, for any first non-exception input set $X = X_0, \ldots, X_n$ and any second non-exception input set $Y = Y_0, \ldots, Y_n$ in an input space, wherein corresponding inputs have a same mantissa and $(t_0 X_{0.exp} + \cdots + t_n X_{n.exp}) - (t_0 Y_{0.exp} + \cdots + t_n Y_{n.exp})$ is an integer, an instantiation of the hardware design generates outputs $X'$ and $Y'$ with a same mantissa and $X'_{exp} - (t_0 X_{0.exp} + \cdots + t_n X_{n.exp}) = Y'_{exp} - (t_0 Y_{0.exp} + \cdots + t_n Y_{n.exp})$; and
   perform a second verification phase which comprises verifying the property for the hardware design for a subset of input sets in the input space, the subset of input sets selected based on exponents sets wherein $(t_0 X_{0.exp} + \cdots + t_n X_{n.exp}) - (t_0 Y_{0.exp} + \cdots + t_n Y_{n.exp})$ is an integer,

   wherein *exp* denotes an exponent of an input or an output.

15. A computer readable storage medium having stored thereon computer readable instructions that, when executed at a computer system, cause the computer system to perform the method of any of claims 1 to 13.

FIG. 1

FORMALLY VERIFY INPUT SETS WITH A 1ST PREDETERMINED RELATIONSHIP PRODUCE OUTPUTS WITH A 2ND PREDETERMINED RELATIONSHIP — 202

VERIFY PROPERTY FOR SUBSET OF INPUT SETS — 204

VERIFY OUTPUTS HAVE CORRECT SIGN — 206

VERIFY EXCEPTION INPUT SETS PRODUCE EXCEPTION OUTPUTS — 208

VERIFY CERTAIN NON-EXCEPTION INPUT SETS PRODUCE EXCEPTION OUTPUTS — 210

VERIFY NO UNEXPECTED EXCEPTION OUTPUTS — 212

VERIFY RESULTS OF ALL OTHER INPUT SETS LIE IN REPRESENTABLE RANGE — 214

MODIFY HARDWARE DESIGN — 220

VERIFICATIONS SUCCESSFUL? — 216

NO

YES

STORE VERIFIED HARDWARE DESIGN AND/OR MANUFACTURE INTEGRATED CIRCUIT — 218

200

**FIG. 2**

FIG. 3

**FIG. 4**

502
504

CPU

510

GPU

514

DISPLAY — 516

SPEAKERS — 518

CAMERA — 520

522

506 MEMORY

NNA

508

**FIG. 5**

604                    602              606

IC DEFINITION → LAYOUT → CIRCUIT LAYOUT DEFINITION → INTEGRATED CIRCUIT GENERATION → INTEGRATED CIRCUIT
DATASET        PROCESSING

**FIG. 6**

Europäisches
Patentamt

European
Patent Office

Office européen
des brevets

# EUROPEAN SEARCH REPORT

Application Number

EP 23 18 2437

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 460 058 B2 (IMAGINATION TECH LTD [GB]) 29 October 2019 (2019-10-29) <br> * abstract; claims 1,3-6,8-12,16,17; figure 1 * <br> * column 2, line 38f * <br> * column 5, last paragraph – column 6, paragraph 1 * <br> * column 9, line 6f * <br> * column 12, line 54f * <br> * column 19, line 29 – column 20, line 31 * <br> * clauses 28-29 * <br> * the whole document * <br> ----- | 1-15 | INV. <br> G06F30/3323 <br> G06F7/487 <br> G06F7/556 <br><br> ADD. <br> G06F119/16 |

TECHNICAL FIELDS
SEARCHED       (IPC)

G06F

The present search report has been drawn up for all claims

| Place of search | Date of completion of the search | Examiner |
|---|---|---|
| Munich | 10 November 2023 | Dapp, Wolfgang |

EPO FORM 1503 03.82 (P04C01)

## ANNEX TO THE EUROPEAN SEARCH REPORT
## ON EUROPEAN PATENT APPLICATION NO.

EP 23 18 2437

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2023

| Patent document cited in search report | Publication date | Patent family member(s) | Publication date |
|---|---|---|---|
| US 10460058 B2 | 29-10-2019 | EP 3239834 A1 | 01-11-2017 |
| | | GB 2549933 A | 08-11-2017 |
| | | US 2017316116 A1 | 02-11-2017 |
| | | US 2019147122 A1 | 16-05-2019 |

EPO FORM P0459

For more details about this annex : see Official Journal of the European Patent Office, No. 12/82

**EP 4 300 348 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2209585 A